# EUROPEAN PATENT APPLICATION

(11) **EP 4 807 581 A1**
(43) Date of publication of application: **16.09.2026**
(21) Application number: 25193735.5
(22) Date of filing: 04.08.2025
(51) Int. Cl.: G06F 16/36

(54) **AGENTIC ONTOLOGY FRAMEWORK**

(30) Priority: 12.03.2025 US 202563770769 P; 22.05.2025 US 202563810645 P; 10.07.2025 US 202519265953
(71) Applicant: Palantir Technologies Inc., Aventura, Florida 33180 (US)
(72) Inventor: SCHRADER, Max-Philipp, Denver, 80202 (US); COATO, Riccardo, Denver, 80202 (US); KRISHNAN, Sriram, Denver, 80202 (US)
(74) Representative: Jolliffe, Jack Louis

(57) **Abstract**

A method may provide a set of data objects associated with an ontology. A method may receive a user query associated with the set of data objects, provide ontology documentation indicative of a method for accessing data objects, wherein the ontology documentation is specific to the ontology, generate a prompt for providing to a large language model ("LLM")-based agent, wherein the prompt includes at least: the ontology documentation and the user query, and provide the prompt to the LLM-based agent to cause the LLM-based agent to at least: generate a search query based on the ontology documentation and the user query, cause execution of the search query to access one or more data objects; and generate a response to the prompt based at least in part on the one or more data objects. A method may receive and causing display of the response in an interactive graphical user interface.

## Description

### TECHNICAL FIELD

The present disclosure relates to systems and techniques for managing computational resources which may involve utilizing computer-based models. More specifically, the present disclosure relates to computerized systems and techniques for managing computational resources of artificial intelligence powered agents.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Computers can be programmed to perform calculations and operations utilizing one or more computer-based models. For example, computer-based agents (e.g., artificial intelligence ("AI") powered agents) can be deployed by computing systems to solve various problems.

### SUMMARY

The systems, methods, and devices described herein each have several aspects, no single one of which is solely responsible for its desirable attributes. Without limiting the scope of this disclosure, several non-limiting features will now be described briefly.

Software-based workflows or applications can facilitate systematic organization and automation of tasks and processes on computing systems and may streamline operations and enhance efficiency in the execution of tasks and processes. Once created or deployed, a workflow or a software application may be operated and/or updated to accomplish certain user objectives. Computer-based agents can be deployed as part of the workflow or software applications to build the workflow or software application and/or interact with the datasets used to build the workflow or software application. These agents, which may be enabled by and/or comprise large language models ("LLMs"), may be configured, programmed, or trained to perform a range of computations to solve tasks or problems or execute tools to solve the tasks or problems. An LLM-based agent can be a computer-based agent that incorporates and/or has access to one or more LLMs. The use of agents, and tools by agents, can provide substantial programmatic and processing efficiencies, and can perform intensive reviews and complex analyses. For example, the agent can use these tools to build or update an ontology, query datasets, process datasets, write to datasets, implement workflows or applications, communicate with external application programming interfaces ("APIs"), and the like. These agents can perform these operations and computations in response to user queries.

However, although there may be a plethora of information in an ontology, agents may not benefit from that information due to constraints associated with the agent. The agent may also be limited in its capacity to handle user queries with more complex inquiries, such as being able to perform complex computations to solve tasks or problems that could benefit from interactions with the ontology or datasets that build upon the prior interactions. For example, an agent may not have the capability or tools to perform an initial derivation to determine the steps necessary to solve a problem without access to certain information, or the agent may not be able to determine how to access needed information. Similarly, the agent may not have the capability or tools to access due to limitations in the expressivity or agency of the agent when operating using a domain-specific language ("DSL") that limits the types of interactions possible with the ontology or data. The execution of processing tasks by agents having inadequate information may result in the performance of partially or entirely unsuccessful computing operations that waste resources, memory and time. Furthermore, such operations may ultimately fail to achieve an intended technical operation in a database or dataset.

The present disclosure describes systems and methods (generally collectively referred to herein as an "agentic framework system" or simply a "system") that can advantageously overcome various of the technical challenges mentioned above and herein, among other technical challenges. More specifically, various implementations of the systems and methods of the present disclosure can advantageously enable agent-based communication with pertinent datasets to automatically derive how to solve complex computational tasks or problems in both real time and in a resource-efficient manner. For example, the system can enable agents to communicate with ontology-based data sources by generating and/or providing ontology documentation to the agents. The ontology documentation can comprise an abstraction layer that enables additional agentic functionality or capabilities for the agent. The ontology documentation may be generated using, or based on, for example, an ontology software development kit ("OSDK"). The ontology documentation can, for example, be indicative of methods for accessing data objects defined by an ontology. In various implementations, similar documentation may be generated and/or used by an agent of the system to enable additional agentic functionality or capabilities with respect to different types of data sources, or data items or objects of different types.

Advantageously, the system may utilize agents (including LLM-based agents), which can optionally coordinate with each other, to automatically derive how to solve more complex computational tasks or problems by interfacing with data (of, for example, one or more data sources and/or datasets) and their respective ontologies, thereby improving the performance and accuracy of the system. Advantageously, the system can iteratively interact with, and/or access, the data based on the ontology documentation. The ontology documentation can include information specific to the particular ontology-based data source (including, for example, data object types of the data source) to enable the agent to perform search queries on the data source. Accordingly, the agent can be enabled to access data from the data source relevant to a user query.

For example, even if an answer to a user query would not be readily available, the system can generate a prompt from the user query and the ontology documentation to cause the agent to determine an action plan. Based on processing of the prompt by the agent, the response (which may indicate that accessing the ontology-based data source is needed), the agent of the system can generate, again based on the ontology documentation, search queries for querying data from the ontology-based data source. The search queries may include accessing an API that can interact with the data based on the ontology documentation to pull the requested information. If needed, the agent can then determine another prompt and/or search query to run, or even assign tasks or further operations to sub-agents.

Advantageously, the agent can interact with the ontology and corresponding data by reading and writing associated code through the search queries. The agent can determine next steps to take in performing an operation even if a given search query returns an error, such as a code generated by the agent not running. The agent can continue this process until the user query can be completed or answered. Advantageously, the agent can also automatically provide changes to the workflow, application, dataset, or ontology, such as if the agent cannot complete an operation without the change. In such instances, an operator may have a chance to review before or after the change. Furthermore, information generated by the agent may be analyzed to determine the longevity of its use and can be saved for retention for a period based on that expected use. Accordingly, a user query intended to generate one-time information can be more efficiently generated and removed once completed to avoid inefficiencies in storage.

Advantageously, the interactive and dynamic user interfaces of the system can be enabled by innovations in efficient interactions between the user interfaces and underlying systems and components to provide a conversational interface, which is not restricted to a DSL due to the ontology documentation and that is backed by an LLM-based agent. An LLM-based agent can be a computer-based agent that incorporates and/or has access to one or more LLMs. The system can enable agents to coordinate (e.g., handoff a task from one agent to another) with each other to effectively solve computational tasks or problems in both time and resource-efficient manners. The agents and the interactions they can have with the ontology-based data sources, or other agents, can be enabled by definitions of the ontology and/or informed through the OSDK. Furthermore, information useful for processing computational tasks or solving problems can be effectively and reliably shared among agents through the system while respecting security and/or permissions defined by the system and/or users. The system can utilize a preferred language, such as Python, which can allow the system to interact with the ontology and ontology-based data sources more efficiently. Additionally, the system may provide user interfaces that allow users to track or monitor problem-solving processes performed by agents to evaluate the soundness of steps taken, or decisions made by agents, throughout the process, or further allow users to configure agents based on various user objectives to enhance scalability and reusability of the system.

Additionally, various embodiments of the present disclosure are inextricably tied to computer technology. In particular, various embodiments rely on detection of user inputs via graphical user interfaces, calculation of updates to displayed electronic data based on those user inputs, automatic processing of related electronic data, application of language models and/or other artificial intelligence, and presentation of the updates to displayed information via interactive graphical user interfaces. Such features and others (e.g., processing and analysis of large amounts of electronic data) are intimately tied to, and enabled by, computer technology, and would not exist except for computer technology.

According to various implementations, large amounts of data are automatically and dynamically calculated interactively in response to user input, and the calculated data is efficiently and compactly presented to a user by the system. Thus, in some implementations, the user interfaces described herein are more efficient as compared to previous user interfaces in which data is not dynamically updated and compactly and efficiently presented to the user in response to interactive inputs.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions. For example, user interaction with the interactive user interface via the inputs described herein may provide an optimized interaction with models and model-related data.

Further, the interactive and dynamic user interfaces, and computer-based interfaces, described herein are enabled by innovations in efficient interactions between the user interfaces and underlying systems and components. For example, disclosed herein are improved methods for employing agents to automatically solve complex computational tasks or problems through coordination among the agents. Advantageously, the system enables agents to coordinate (e.g., handoff a task from one agent to another) with each other to effectively solve computational tasks or problems in both time and resource efficient manners. Furthermore, information useful for processing computational tasks or solving problems can be effectively and reliably shared among agents through the system while respecting security and/or permissions defined by the system and/or users. Additionally, the system may provide user interface(s) that allow users to interact with problem solving processes performed by agents to evaluate the soundness of steps taken or decisions made by agents or further allow users to configure agents based on various user objectives to enhance scalability and reusability of the system.

Thus, various implementations of the present disclosure can provide improvements to various technologies and technological fields, and practical applications of various technological features and advancements. For example, as described above, existing computer-based model management and integration technology is limited in various ways, and various implementations of the disclosure provide significant technical improvements over such technology. Additionally, various implementations of the present disclosure are inextricably tied to computer technology. In particular, various implementations rely on the operation of technical computer systems and electronic data stores, automatic processing of electronic data, and the like. Such features and others (e.g., processing and analysis of large amounts of electronic data, management of data migrations and integrations, and/or the like) are intimately tied to, and enabled by, computer technology, and would not exist except for computer technology. Further, the implementation of the various implementations of the present disclosure via computer technology enables many of the advantages described herein, including more efficient management of various types of electronic data (including computer-based models).

Various combinations of the above and below recited features, embodiments, implementations, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise one or more computer-readable storage mediums or devices comprising, configured to store, and/or storing program instructions, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising one or more computer-readable storage mediums or devices, and/or one or more computer-readable storage mediums or devices, are disclosed, wherein the computer-readable storage mediums comprise, are configured to store, and/or store program instructions, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1A is a block diagram illustrating an example agent system in an example computing environment, according to various implementations of the present disclosure.
FIG. 1B is block diagram of an example of the agent system, where the agent system can be utilized to automatically solve complex problems received from users, according to various implementations of the present disclosure.
FIG. 2A illustrates an object-centric conceptual data model, according to various implementations of the present disclosure;
FIG. 2B is a block diagram illustrating an example data object, according to various implementations of the present disclosure.
FIG. 3 is a flowchart illustrating an example method for processing tasks by an agent with ontology documentation of the agent system, according to various implementations of the present disclosure.
FIG. 4 is a flowchart depicting an example method for generating and displaying a response in response to the agent receiving a prompt of the agent system, according to various implementations of the present disclosure.
FIG. 5 is a flowchart depicting an example method for facilitating communications between an agent and a user, according to various implementations of the present disclosure.
FIGS. 6, 7, 8A, and 8B are illustrations of example user interfaces of the agent system, according to various implementations of the present disclosure.
FIG. 9 is a block diagram illustrating an example operation of the system, , according to various implementations of the present disclosure.
FIG. 10 is a block diagram illustrating an example operation of the system, according to various implementations of the present disclosure.
FIG. 11 is a block diagram of an example computer system consistent with various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

To facilitate an understanding of the systems and methods discussed herein, several terms are described below and throughout this specification. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

The term "computer-based agent" (or "agent," "LLM-based agent," "AI-based agent," and/or "AI agent"), as used in the present disclosure, can refer to a computational decision-making computer-based entity that is designed to be specialized at solving data analysis tasks, such as analytical and/or computational tasks or problems, and/or a computer-based entity that can execute certain tools to solve specific tasks or problems. The computational tasks or problems, and/or data analysis tasks or problems, that a particular agent can solve can include simple (e.g., sending a single request to a large language model ("LLM") service) or more complex tasks (e.g., chaining a set of tools behind each other in a dynamic fashion to solve a complex problem). For example, a complex computation task or problem can include generating a software program as requested by a user query. According to various implementations, a computer-based agent can include a system (e.g., one or more computer-based and/or software systems) in which one or more LLMs dynamically and/or iteratively direct the processes, tasks, tool usage, and/or the like, of the agent and/or one or more LLMs. A computer-based agent can include a system (e.g., one or more computer-based and/or software systems) in which one or more LLMs and/or the agent maintains control over how the agent accomplishes one or more tasks. An agent that involves and/or includes an LLM can be referred to herein as an "LLM-based agent," and an agent that involves and/or includes a computer-based model and/or AI model (e.g., including LLMs) can be referred to herein as an "AI-based agent." In various implementations, an agent can be defined and/or configured by a combination of building blocks including one or more of: (1) agent logic: a core programmatic definition on how this specific agent should interact with the available tools, configurations, and the user; (2) tools: a defined set of tools available for the specific agent; (3) guardrails: a security mechanism to control the interaction of the agent with the system, such as permissions regarding ontology access; and (4) agent storage (herein also referred to as "agent memory"): a data store and/or memory space allowing an individual agent to keep track of relevant information (e.g., messages and accessories) during and across runs. Further details on computer-based agents are described in U.S. Pat. App. Pub. No. 2025/0110786, published April 3, 2025, and titled "AGENT OPS FRAMEWORK," the entire contents of which is hereby incorporated herein by reference in its entirety.

A "software application" (or "Application") can be any computer-executable program or group of programs, scripts, routines, and/or the like, designed to perform specific tasks for users. The tasks performed can range from productivity functions, such as document processing, email management, and spreadsheet management, to entertainment, such as gaming and media playback, or other types of tasks. A software application may be built to run on various platforms, including desktop computers, mobile devices, servers, web browsers and/or the like, and they can interact with the underlying operating system to utilize hardware resources and provide a user interface for interaction. A software application may be developed using programming languages and frameworks that are suited to the target platform. A software application can be used to perform various actions (e.g., send or unsend an email, edit or update a document, or the like) on various data objects of data object types (e.g., a document data object, a log data object, an email data object, or the like).

The term "configuration" (or "Settings"), as used in the present disclosure, can refer to a version-controlled specification of pointers to the building blocks of an agent and/or versions of the building blocks. For example, an agent can be configured to a specific configuration of settings that associates the agent with a specific ontology, an LLM, one or more tools, one or more accessories, or the like.

The term "coordinator" (or "Agent Coordinator"), as used in the present disclosure, can refer to an entity that manages interactions among other entities. For example, the term "agent coordinator" can refer to an entity that manages interactions among agents deployed by an agent system. The agent coordinator may serve a role similar to a control tower to ensure agents act in coordination with each other in an intentional manner. For example, an agent coordinator may supervise handoffs of problems, tasks, or sub-tasks among agents to ensure handoffs are robustly performed and do not interfere with processing of other tasks or sub-tasks.

The term "tool," as used in the present disclosure, can refer to a specific capability that is available to an agent to solve a given problem. In its core, a tool may be mostly responsible to perform a deterministic action. A tool may allow an agent to interact with the operational system, an ontology, internal databases and system, and/or external systems. A tool can be any set of logic or rules that can be provided to an agent for the agent's use, such as to obtain additional information by generating a request for access to additional data via a plug-in. Thus, a tool can be used by an agent to generate requests (that may be fulfilled by the system) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. Example tools include ontology function tool, date/time tool, query objects tool, calculator tool, and apply action tool. Tools, or the set of logic they comprise for performing one or more operations, may be defined by a system, external database, ontology, and/or a user.

"Tool Information" can include information associated with a tool that is available to an agent and/or provided to an LLM, and is usable to implement the tool functionality. Tool information can indicate how data is structured, such as in an ontology. Tool information can indicate properties associated with a particular data object type, such as a data object type associated with a selected tool. Tool information can include instructions for implementing a tool. Tool information can include instructions for generating a tool call to use the tool, including instructions for formatting a tool call. In some implementations, tool information can comprise tool implementation examples for executing one or more tool operations which can include pre-defined examples, user-selected examples, user-generated examples, and/or examples that are automatically dynamically configured based on context. In various implementations, tool information can include tool definitions, which may describe the function(s) of the tool and how to execute the tool. For example, the tool definition can indicate inputs (e.g., datasets) required to call the tool. In various implementations, tool information can include tool parameters (e.g., tool settings) that dictate tool behavior. For example, this can include whether the system (e.g., an agent) can auto-execute a tool call, or whether the agent requires user authorization to execute a tool call.

The term "run," as used in the present disclosure, can refer to a full interaction of a user with an agent system in performance of a task, such as one or more interactions with an LLM and/or external data source. An individual run can refer to a full interaction of the user with the agent system, or a user session operated by the user. Information associated with a run may be stored by an agent system to facilitate automation orientation and/or co-pilot orientation. The information related to the individual run may include the initial prompt and subsequent prompts received by the agent from the user, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like.

The term "accessory," as used in the present disclosure, can refer to any information, for example computer-readable information, which may be useful or necessary for agents to process tasks. An accessory may be known to be correct to an agent system. Accessories may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. An accessory may be permissioned and/or subject to various security constraints such that the accessory may be accessible to some agents but inaccessible to other agents. Accessories may be generated or created by agents during processing tasks but may also be provided by users based on demands of users. Example accessories may include: (a) the calculated sum of items in an inventory, (b) an identification (ID) of a document containing needed information, (c) a result of a system operation, such as creation of a new user. Accessories may be stored as Objects in an ontology or in other data formats. Accessories may be multi-modal. Accessories can be of simple types, such as string, double, integer, or the like, and can also be of more complex types, such as images, data frames, sound files, or the like. Accessories can be created by agents and/or by users of an agent system. For example, as part of executing a run, an agent may utilize a set of tools to create new accessories. As another example, before starting a run, users can select relevant existing accessories and/or create new accessories that contain relevant information for the specific problems to be solved. An agent system can track a lineage of an accessory to know, for example, which accessories were used by which tools to create the accessory. In various implementations, an accessory may be a tool that is accessible by the system (e.g., accessible by an agent) in response to a tool call, or include a tool. In various implementations, an accessory can include context.

The term "model," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like. A "nondeterministic model" as used in the present disclosure, is any model in which the output of the model is not determined solely based on an input to the model. Examples of nondeterministic models include language models such as LLMs, ML models, and the like.

A "language model" is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, and/or the like). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A Large Language Model ("LLM") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. LLMs may work by taking an input text and repeatedly predicting the next word or token (e.g., a portion of a word, a combination of one or more words or portions of words, punctuation, and/or any combination of the foregoing and/or the like). An LLM may be of any type, including a Question Answer ("QA") LLM that may be optimized for generating answers from a context, a multimodal LLM/model, a diffusion-based LLM/model, any combination of the foregoing or the like, and/or the like. An LLM (and/or other models of the present disclosure) may include, for example, a NN trained using self-supervised learning and/or semi-supervised learning, a feedforward NN, a recurrent NN, and/or the like. An LLM (and/or other models of the present disclosure) may further include, for example, attention-based and/or transformer architecture or functionality.

While certain aspects and implementations are discussed herein with reference to use of a language model, LLM, and/or AI, those aspects and implementations may be performed by any other language model, LLM, AI model, generative AI model, generative model, ML model, NN, multimodal model, diffusion-based model, other algorithmic processes, and/or any combination of the foregoing or the like. Similarly, while certain aspects and implementations are discussed herein with reference to use of a ML model, language model, or LLM, those aspects and implementations may be performed by any other AI model, generative AI model, generative model, NN, multimodal model, diffusion-based model, other algorithmic processes, and/or any combination of the foregoing or the like.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), Claude, Gemini, LLaMA (Large Language Model Meta AI), and BigScience Large Open-science Open-access Multilingual Language Model (BLOOM).

"User Input" (or "Natural Language Input," "User Query," "User Operation," and/or the like) can be any operations performed by one or more users to user interface(s) and/or other user input devices associated with a system. Such user inputs can include a term, phrase, question, query, and/or statement written in a human language (e.g., English, Chinese, Spanish, and/or the like) that is provided by a user, such as via a keyboard, mouse, touchscreen, voice recognition, and/or other input device. User input can include a task to be performed, such as by an agent and/or LLM, in whole or in part. User input can include a request for data, such as data accessed and/or processed by one or more services. User input can indicate one or more tools associated with the user request or task which may facilitate performing the task. User input can indicate one or more data object types associated with a tool. User input can indicate one or more actions associated with a tool. User input can include a user selection of a format for a response from an agent and/or LLM. User input can include a user-defined variable to which a response may be saved.

A "Data Processing Service" (or "Service" or "Plug-in") can be any software and/or computer-based service that receives and/or responds to requests for data and/or data processing. Such a service may be accessible via an API that is exposed to an Agent System (and/or other remote systems) and allows data processing requests to be received via API calls from those systems (e.g., an agent). Such a service may be implemented as a plug-in. A few examples of services or plug-ins include a table search service, a filter service, an object search service, a text search service, or any other appropriate search service, indexing services, services for formatting text or visual graphics, services for generating, creating, embedding and/or managing interactive objects in a graphical user interface, services for caching data, services for writing to databases, or any other data retrieval, processing, and/or analysis function.

A "prompt" (or "natural language prompt," "model input," and/or the like) can be, for example, a term, phrase, question, and/or statement written in a human language (e.g., English, Chinese, Spanish, and/or the like), and/or other text string, that may serve as a starting point for a language model and/or other language processing. A prompt may include only a user query or may be generated based on a user query, such as by a prompt generation module (e.g., of a document search system) that supplements a user query with instructions, examples, and/or information that may improve the effectiveness (e.g., accuracy and/or relevance) of an output from the language model. The supplement to the user query can include ontology documentation, which can be based on documentation template and information indicative of an ontology. A prompt may be provided to an agent (which can include an LLM), which the agent can use to generate a response (or "model output"). The agent can generate the response by causing generation and execution of one or more search queries.

A "search query" can be, for example, an input recognizable by an agent determine how to interact with tools. The agent can generate the response by causing generation of the search query, which can include portions of the prompt provided to the agent, and causing execution of the search query to access data objects of the data object types defined by the ontology documentation. The search query can act as an action plan, and/or be used to determine an action plan, that provides steps on how the agent can solve the computational tasks or problems provided in the prompt. The agent can generate one or more search queries to solve the computational tasks or problems. If the output of the search query does not result in solving the computational tasks or problems or if there is an unexpected error result (such as a result differing from the action plan), then the result can be used in causing generation of another search query. The result and computational process caused by the agent can be displayed to the user, such as for troubleshooting. In some instances, the system can adjust what is displayed to the user to be a term, phrase, question, and/or statement written in a human language (e.g., English, Chinese, Spanish, and/or the like), and/or other text string.

"Context" (or "Context Items") can be any information associated with user inputs, prompts, responses, and/or the like that are generated and/or communicated to/from the user, the agent system, an agent, the LLM, the data processing services, and/or any other device or system. For example, context may include a conversation history of all of the user inputs, prompts, and responses of a user session. Context may be provided to an LLM to help an LLM understand the meaning of and/or to process a prompt, such as a specific piece of text within a prompt. Context can include information associated with a user, user session, or some other characteristic, which may be stored and/or managed by a context module. Context may include all or part of a conversation history from one or more sessions with the user (e.g., a sequence of user prompts and orchestrator selector responses or results, and/or user selections (e.g., via a point and click interface or other graphical user interface). Thus, context may include one or more of: previous analyses performed by the user, previous prompts provided by the user, previous conversation of the user with the language model, schema of data being analyzed, a role of the user, a context of the data processing system (e.g., the field), and/or other contextual information.

A context module may provide all or only a relevant portion of context to a selection module for use in selecting one or more plug-ins and/or service orchestrators (e.g., configured to generate requests to plug-ins) for use in generating a properly formatted service request. Context can include tool information. Context can include tool implementation examples. In various implementations, context may include identification of services and parameters of prior operations, but not underlying data that was accessed or retrieved by the service (e.g., use of graph visualization service and graph parameters without indicating the data illustrated in the graph). In various implementations, context may include some or all of the underlying data accessed or retrieved by the service.

An "ontology" can include stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An organization may use an ontology to model a view on what objects exist in the world, what their properties are, and how they are related to each other. An ontology may be user-defined, computer-defined, or some combination of the two. An ontology may include hierarchical relationships among data object types. An organization may use an ontology to model a view of, or provide a template for, what objects exist in the world, what their properties are, and how they are related to each other.

A "data object" (or "object" or "data object instance") can be a data container for information representing a specific thing in the world that has a number of definable properties. For example, a data object can represent an interaction (e.g., recording events occurred during the interaction) between a user and an agent system. A data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth. A data object may be of a data object type, where the data object is stored in a database that is associated with an ontology that defines the data object type.

A "data object type" (or "object type") can be a type of a data object (e.g., person, event, document, and/or the like). Data object types may be defined by an ontology and may be modified or updated to include additional object types. A data object definition (e.g., in an ontology) may include how the data object is related to other data objects, such as being a sub-data object type of another data object type (e.g., an agent may be a sub-data object type of a person data object type), and the properties the data object type may have.

"Ontology documentation" can be, for example, instructions, examples, and/or information that may improve the effectiveness (e.g., accuracy and/or relevance) of the agent, and that can supplement the user query to generate a prompt. Ontology documentation can be based on documentation template and information indicative of an ontology. This information indicative of the ontology can include indications of definitions of data object types of the ontology. The documentation template may not be tied to any particular ontology. The ontology documentation can be formed using the documentation template to be specific to a particular ontology by specifying the documentation template with the information indicative of the ontology.

For example, the documentation template can include instructions on how to access properties of a data object type, such as but not limited to, property names, property objects, and property types for each property associated with the data object type. This documentation template for properties of a data object type can also access these property values in particular formats, such as a markdown format. The information indicative of the ontology can be used to specify a desired ontology that the documentation template can be used to focus onto. For example, the information indicative of the ontology can include the list of data object types defined by an ontology. Accordingly, the ontology documentation for properties can be specific to the data object types defined by the ontology and provide instructions on how to access properties associated with each of those specific data object types. The documentation template can include, but is not limited to, information on how to access search around methods on an ontology, example values for data object types and properties, and/or the like. The ontology documentation can include some or all of the information provided by the documentation template, but specified to be particular to a desired ontology.

The ontology documentation can thus be used to return data objects, properties, relationships, and/or the like that are associated with the ontology documentation. The documentation template and information indicative of the ontology can be generated, in some instances automatically, using an ontology software development kit ("OSDK"). The documentation template, and the ontology documentation, can be in different languages, such as TypeScript, Java, cURL, Python, and/or the like. This allows for an agent to select a preferred language to communicate with and access the data objects. The selected language can be determined either manually or automatically. The information on how to access data object types can differ depending on the language, including how the data object are returned. For example, the selected language can be based on a preferred platform used to retrieve the data objects. The ontology documentation can include definitions, functions, example API-calls, and/or the like, for interacting with (e.g., accessing, writing to, modifying, deleting, and/or the like) the ontology, data that is related to and/or defined by the ontology, and/or the like. The ontology documentation can provide examples of how particular types of data objects can be accessed or adjusted. For example, the ontology documentation can include, but is not limited to, describing how to read properties of a data object type, how to read the relationship between two data object types, how to input a property for a data object of a data object type, how to store a data object of a data object type, how to generate a new data object type to the ontology, how to compare properties of data objects of the same data object type, how to compare similar properties of data objects of different data object types, and/or the like. These examples can be used for an agent to determine how it can run a task.

An ontology software development kit ("OSDK") can be, for example, a plug-in, a library, code, documentation, and/or the like, which can provide and/or enable, within software development environments, applications, systems, and/or the like, connections to and/or communications with an ontology and/or ontology-related data. The OSDK can include documentation on how to use an API, and/or may be used to define an API, for interacting with (e.g., accessing, writing to, modifying, deleting, and/or the like) the ontology, data that is related to and/or defined by the ontology, and/or the like. The OSDK can include information that is usable by an agent or human agent to interact with the ontology or data in a software development environment. Accordingly, the OSDK can provide information that an agent can use for enabling an application to have such functionality. Ontology documentation may be based on (including may be generated based on) documentation templates that are part of the OSDK to be specific to a particular ontology based on the information indicative of the ontology. The information indicative of the ontology can be included as part of the OSDK, or separate from the OSDK. The ontology documentation can provide supplemental information that provides the agent with an understanding of the ontology and the data objects in relation with the prompt and search query. Furthermore, the OSDK can provide the agent with information on how to interact and adjust databases storing data objects or updating ontology. Agents may operate using a design-specific language ("DSL"). However, a DSL may reduce the expressivity of agents (and thereby the agency of the agent). The OSDK can advantageously enable the agent to write and operate in any language it prefers, such as any programming language (e.g., Python) and to fully wield and use the ontology. The OSDK can become a universal orchestration language that can let the entire agent life cycle access, in a read and write way, the entirety of the ontology. Further details on OSDK are described in U.S. Pat. App. No. 19/189,816, filed April 25, 2025, and titled "ONTOLOGY BUILD AUTOMATION TOOL," which is incorporated by reference in its entirety.

A "data store" can be any computer-readable storage medium and/or device (or collection of data storage mediums and/or devices). Examples of data stores include, but are not limited to, optical disks (e.g., CD-ROM, DVD-ROM, and the like), magnetic disks (e.g., hard disks, floppy disks, and the like), memory circuits (e.g., solid state drives, random-access memory (RAM), and the like), and/or the like. Another example of a data store is a hosted storage environment that includes a collection of physical data storage devices that may be remotely accessible and may be rapidly provisioned as needed (commonly referred to as "cloud" storage). According to various implementations, any data storage, data stores, databases, and/or the like described in the present disclosure may, in various implementations, be replaced by appropriate alternative data storage, data stores, databases, and/or the like.

A "database" can be any data structure (and/or combinations of multiple data structures) for storing and/or organizing data, including, but not limited to, relational databases (e.g., Oracle databases, PostgreSQL databases, MySQL databases, and the like), non-relational databases (e.g., NoSQL databases, and the like), in-memory databases, spreadsheets, comma separated values (CSV) files, eXtensible markup language (XML) files, TeXT (TXT) files, flat files, spreadsheet files, and/or any other widely used or proprietary format for data storage. Databases are typically stored in one or more data stores. Accordingly, each database referred to herein (e.g., in the description herein and/or the figures of the present application) can be understood as being stored in one or more data stores. Additionally, although the present disclosure may show or describe data as being stored in combined or separate databases, in various implementations such data may be combined and/or separated in any appropriate way into one or more databases, one or more tables of one or more databases, and/or the like. According to various implementations, any database(s) described in the present disclosure may be replaced by appropriate data store(s). Further, data source(s) of the present disclosure may include one or more databases, one or more tables, one or more data sources, and/or the like, for example.

### Overview

As mentioned above, the present disclosure describes systems and methods (generally collectively referred to herein as an "agentic framework system" or simply a "system") that can advantageously overcome various of the technical challenges mentioned above and herein, among other technical challenges. More specifically, various implementations of the systems and methods of the present disclosure can advantageously enable agent-based communication with pertinent datasets to automatically derive how to solve complex computations tasks or problems in both real time and in a resource efficient manner. For example, the system can enable agents to communicate with ontology-based data sources by generating and/or providing ontology documentation to the agents. The ontology documentation can comprise an abstraction layer that enables additional agentic functionality or capabilities for the agent. The ontology documentation may be generated using, or based on, for example, an ontology software development kit ("OSDK"). The ontology documentation can, for example, be indicative of methods for accessing data objects defined by an ontology. In various implementations, similar documentation may be generated and/or used by an agent of the system to enable additional agentic functionality or capabilities with respect to different types of data sources, or data items or objects of different types.

Advantageously, the system may utilize agents (including LLM-based agents), which can optionally coordinate with each other, to automatically derive how to solve more complex computational tasks or problems by interfacing with data (of, for example, one or more data sources and/or datasets) and their respective ontologies, thereby improving the performance and accuracy of the system. Advantageously, the system can iteratively interact with, and/or access, the data based on the ontology documentation. The ontology documentation can include information specific to the particular ontology-based data source (including, for example, data object types of the data source) to enable the agent to perform search queries on the data source. Accordingly, the agent can be enabled to access data from the data source relevant to a user query.

For example, even if an answer to a user query would not be readily available, the system can generate a prompt from the user query and the ontology documentation to cause the agent to determine an action plan. Based on processing of the prompt by the agent, the response (which may indicate that accessing the ontology-based data source is needed), the agent of the system can generate, again based on the ontology documentation, search queries for querying data from the ontology-based data source. The search queries may include accessing an API that can interact with the data based on the ontology documentation to pull the requested information. If needed, the agent can then determine another prompt and/or search query to run or even assign tasks or further operations to sub-agents.

Advantageously, the agent can interact with the ontology and corresponding data by reading and writing associated code or functions through the search queries. The agent can determine the next steps to take in performing an operation even if a given search query returns an error, such as a code generated by the agent not running. The agent can continue this process until the user query can be completed or answered. Advantageously, the agent can also automatically provide changes to the workflow, application, dataset, or ontology, such as if the agent cannot complete an operation without the change. In such instances, an operator may have a chance to review before or after the change. Furthermore, information generated by the agent may be analyzed to determine the longevity of its use and can be saved for retention for a period based on that expected use. Accordingly, a user query intended to generate one-time information can be more efficiently generated and removed once completed to avoid inefficiencies in storage.

Advantageously, the interactive and dynamic user interfaces of the system can be enabled by innovations in efficient interactions between the user interfaces and underlying systems and components to provide a conversational interface, which is not restricted to a DSL due to the ontology documentation and that is backed by an LLM-based agent. An LLM-based agent can be a computer-based agent that incorporates and/or has access to one or more LLMs. The system can enable agents to coordinate (e.g., handoff a task from one agent to another) with each other to effectively solve computational tasks or problems in both time and resource-efficient manners. The agents and the interactions they can have with the ontology-based data sources, or other agents, can be enabled by definitions of the ontology and/or informed through the OSDK. Furthermore, information useful for processing computational tasks or solving problems can be effectively and reliably shared among agents through the system while respecting security and/or permissions defined by the system and/or users. The system can utilize a preferred language, such as Python, which can allow the system to interact with the ontology and ontology-based data sources more efficiently. Additionally, the system may provide user interfaces that allow users to track or monitor problem-solving processes performed by agents to evaluate the soundness of steps taken, or decisions made by agents, throughout the process, or further allow users to configure agents based on various user objectives to enhance scalability and reusability of the system.

For example, the system can include various computing functionality and primitives (which can include, for example, various tools), on which can sit the ontology, on which can sit the one or more agents (including one or more coordinators). The system can include pathways to onboard AI/LLM-based agents in a way similar to onboarding of people, including providing a level of agency, providing the right tools, and providing guardrails and guidance for assessing the effectiveness with which they are using the tools.

### Agent Configurations

Computer-based agents deployed in an agent system (or AI system) may be configurable based on various settings or parameters. Agents in the system may share one or more common building blocks (e.g., an agent logic that defines how agents operate and/or interact with each other, tools, and/or users) but may be configured to various configurations by the system and/or users. In some implementations, an agent can be configured or reconfigured to be associated with various ontologies, large language models (LLMs), tools, accessories, storages, or the like. For example, a first configuration of an agent may associate the agent with a first set of ontologies, LLMs, tools, accessories, and storages and a second configuration of the agent may associate the agent with a second set of ontologies, LLMs, tools, accessories, and storages. The system may flexibly (e.g., based on user demands) reconfigure an agent from one configuration to another configuration. Advantageously, reconfigurable agents enable the system to swap or switch agent configurations for achieving various objectives. For example, the system may feed the same input(s) to two agents that are configured the same except LLMs utilized by the two agents to evaluate or benchmark performances of the LLMs. As another example, when an agent is tasked to solve a problem related to a new subject matter, the system and/or users may reconfigure the agent to utilize an ontology that is created or updated based on the new subject matter.

In some implementations, configurations of an agent can be version controlled by the system. For example, the system may assign version numbers (e.g., a string of text) to corresponding configurations of agents and keep track of configurations of agents using version numbers. More specifically, a first configuration of an agent may be assigned or identified by a first version number and a second configuration of the agent may be assigned or identified by a second version number. Additionally and/or optionally, the system may assign identification numbers (IDs) to components (e.g., one or more ontologies, LLMs, tools, and storages) of configurations of agents. For example, a first LLM and a first ontology in a first configuration of a first agent may be assigned a first LLM ID and a first ontology ID, and a second LLM and a second ontology in a second configuration of a second agent may be assigned a second LLM ID and a second ontology ID. Advantageously, version controlled configurations and/or IDs assigned to components of configurations may allow the system robustly and effectively track operations of agents, adapt agents among various configurations, or contrast strengths and weakness of an agent when operating under disparate configurations. In various implementations, the system may utilize pointers to access or point to an ontology, LLM(s), tool(s), accessory, storage(s), or one or more configurations associated with the agent.

Additionally, the system may generate and maintain a log to record events, timelines, received inputs, or generated outputs while an agent processes tasks. The log may describe events that occurred while the agent processes tasks and corresponding timestamps, inputs received from users and/or the system, and/or results generated by the agent while processing tasks. In various implementations, the log may record number of errors committed by the agent while processing tasks. Advantageously, the log may allow the system or users to effectively monitor or evaluate performances of agents for taking appropriate measures (e.g., re-train an agent for processing a particular type of task in response to monitoring a high error number from the agent while processing the particular type of task).

### Agent Handoffs

Agents may be configured to coordinate with each other to process tasks collaboratively. In some implementations, agents may coordinate with other agents by handing off tasks (e.g., a partially completed task) to other agents that are suitable or specialized in performing a next step in the tasks. For example, when an agent determines that a task which the agent is processing requires specialized capability, for example in terms of a particular ontology, LLM, tools, accessories, agent storage, or other aspects of an agent, the agent may handoff some or all of the task to another agent that has been trained or tested to efficiently solve the task. For example, a first agent may comprise settings including a first configuration that indicates or specifies that it is suitable or specialized in performing a first type or first group of tasks and less specialized in performing at least a second type or second group of tasks. For example, a second agent may comprise settings including a second configuration that indicates or specifies that it is suitable or specialized in performing the second type or second group of tasks and, possibly, that it is less specialized in performing at least the first type or first group of tasks. The first and second configurations may be provided in metadata or other formats stored by, or at least accessible to, the first and second agents. The term less specialized may refer to an agent being capable of performing a type of task but in a less processing efficient manner than a more specialized agent, for example because it requires extra data or a manual intervention by a user. For example, for a video processing task involving both video and audio content, a first agent may comprise a first configuration that indicates that it is more capable of, or specialized for, performing image and video processing tasks (e.g., because it comprises or has access to various types of image-based models, libraries, and/or codecs) but less capable of, or specialized for, performing related audio processing tasks relative to a second agent. For example, the second agent may have a configuration that indicates that it has access to various types of audio-based models, libraries and/or codecs that means that the second agent will be able to handle the audio processing in a more computationally efficient manner than the first agent which handles the image/video processing tasks better than the second agent. For example, the first agent may know in advance, or have access to, the configuration of the second agent, and can determine based on, for example, the metadata of said configuration that it should hand-off the audio processing task (or sub-task) to the second agent. The resulting processed video and audio data can be merged or combined by either the first agent, the second agent or a third agent. Other use cases can be envisaged other than video and/or audio processing, for example tasks involving two or more sub-tasks that involve different types of processing. These tasks may involve language-based tasks and sub-tasks, examples of which are given below.

**In** various implementations, an agent may handoff some (e.g., sub-tasks) or all of a task to one or more child agents which may specialize in processing specific types of tasks or sub-tasks. The parent-child agent relationship can be configurable. For example, an agent can be configured to have child agent(s), and the child agent(s) may be explicitly specified in a configuration of the agent, where a configuration of the child agent(s) may also explicitly specify the agent as a parent agent. As such, the parent-child agent relationship(s) can be bi-directional. An agent can be a parent of another agent, and can also be a child of still another agent. Advantageously, handing off tasks to child agents provides multiple improvements over utilizing a single and large agent to process tasks. For example, handing off sub-tasks to child agents that have been proven to process the sub-tasks efficiently enables the system to effectively process requests from users to return accurate and reliable results. Handing off tasks may further reduce the update or maintenance cost of agents of the system because updates on or migration of agents can be targeted and tailored toward subsets of agents of the system.

When an agent (or coordinator, as discussed further below) determines that handoff of a sub-task to a child agent should occur, the agent (and/or coordinator) may identify information to provide to the child agent to aid in performance of the sub-task. For example, an agent may select one or more accessories (e.g., pieces of information) that are useful for the child agent to process the sub-task, and share the one or more accessories with the child agent. The agent may determine whether an accessory can be shared with the child agent based on permission of users or the system. An accessory, once shared by the agent to the child agent, may provide useful information to the child agent in processing a task or a sub-task more efficiently without the need to discover, generate, or obtain the accessory by the child agent itself.

The system may further allow various types of handoffs depending on use cases or tasks submitted by users. For example, the system may allow blocking handoffs, where an agent may handoff a task to a child agent, pauses until receiving a result from the child agent, and then proceeds after receiving the result. As another example, the system may allow parallel handoffs, where an agent may handoff tasks in parallel to multiple child agents, and, without waiting for results from the child agents, continues to process other tasks or sub-tasks that the agent is processing without handing off. Advantageously, various handoffs schemes enable the system to more flexibly and efficiently utilize agents to process tasks based on characteristics of the tasks. In various implementations, the system may limit number of handoffs associated with task(s) or sub-task(s). For example, for some types of tasks, the system may limit the handoffs of the task that may occur at most twice (e.g., an agent can handoff the task to two child agents) or other numbers. Advantageously, limiting number of handoffs on some or all types of tasks may increase security of the system and reduce likelihood of extensive looping of tasks that may occur if a set of tasks are attempting to incrementally optimize an output.

### Agent Accessory

Accessories are information that may be useful or necessary for agents to process tasks. Accessories may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. An accessory may be permissioned and/or subject to various security constraints such that the accessory may be accessible to some agents but inaccessible to other agents. Accessories may be generated or created by agents during processing tasks but may also be provided by users based on demands of users. For example, when an agent is tasked to perform statistical analysis on production data of a production facility to provide recommendation on how to increase production volume, the user may provide a spreadsheet or other data files that include production data as an accessory for the agent to process the task. Alternatively and/or optionally, accessories may be generated, discovered, synthesized, or created by agents while processing certain tasks. For example, while processing a task that needs to take into account particular information, an agent searched through on-line databases to identify a document containing the particular information and saved the particular information along with a document ID of the document as an accessory. Additionally and/or optionally, accessories may be created by agents using tools while processing tasks. For example, an accessory may be a result generated by an agent while processing a task, where the result may be utilized by the agent or other agents for processing other tasks.

To use accessories for processing tasks, agents may store accessories in memory (e.g., agent storages). To access accessories, agents may utilize pointers that point to locations in the memory where desired accessories are stored. In various implementations, accessories may be stored as data objects that are defined in one or more ontologies. An accessory can be multi-modal (e.g., including both textual and video information). An accessory can also come in different forms and types. For example, an accessory may include strings, double integers, integers, images, data frames, sound files, or the like. An agent may share accessories with other agents if sharing is permitted under the permission of the system. For example, the agent may grant other agents access to an accessory that is stored in a storage associated with the agent and provide a pointer to the accessory to other agents. Advantageously, when utilized by an agent, accessories may enrich knowledge base of the agent or increase potency of the agent.

**In** various implementations, the system can track a lineage of an accessory to track a basis for a generated accessory and/or whether the accessory is further utilized to generate other information. For example, the system can record a lineage of an accessory, where the lineage shows what tool(s) are utilized to generate the accessory. The lineage of the accessory may include metadata that can enable users or the system to efficiently track from where the accessory comes into being and where the accessory is used, such as which agents or tasks use the accessory (which may be one or more versions of an accessory).

In various implementations, lineages of accessories may be presented to users through interactive graphical representations that include nodes (e.g., representing accessories) and/or edges (e.g., representing connections between accessories) of graphical user interfaces (GUIs). Advantageously, the lineage of an accessory enables the system to more efficiently verify or evaluate the usefulness of the accessory. Once an accessory is stored in an agent storage, the system may further evaluate correctness or accuracy of information contained in the accessory. For example, if an agent or the system determines that the accessory contains accurate information, the agent or the system may keep the accessory in an agent storage. But if the agent or the system determines that the accessory contains inaccurate information, the agent or the system may update the accessory and/or delete the accessory from the agent storage.

Additionally and/or optionally, the system may impose a time-to-live constraint on an accessory based on characteristics of the accessory. For example, an accessory that is solely useful for processing a specific task by a specific agent may have a shorter time-to-live, and may be deleted once the specific task has been processed. As another example, an accessory that may be useful for an agent to process various tasks or for other agents may have a longer time-to-live, and may persist after the agent completes tasks using the accessory. As still another example, an accessory that is provided by a user may persist throughout or beyond an individual run, where the individual run is a full interaction of the user with the system. Advantageously, imposing time-to-live constraints on accessories may allow the system to utilize storage resources more efficiently by freeing up storage capacity that otherwise would be occupied by accessories that are no longer useful to users or the system.

### Agent Coordinator

In various implementations, the system may utilize an agent coordinator to supervise handoffs of tasks or sub-tasks among agents to ensure handoffs are robustly performed and do not interfere with processing of other tasks or sub-tasks. For example, if an agent seeks to handoff a first task to a child agent which is processing a second task and the first task requires the child agent switches from a current configuration to a different configuration, the agent coordinator may determine the handoff may adversely impact performance of the child agent and intervene to redirect the handoff to another child agent that has immediate capacity (e.g., already configured to the different configuration) to process the first task. Additionally and/or optionally, the agent coordinator may mange handoffs among agents based on input(s) from user(s). For example, upon receiving an input from a user indicating that a task is to be terminated, the agent coordinator may instruct agents that are processing the task to pause and may block handoffs of sub-tasks of the task. Advantageously, more computing resources may be released to process tasks based on user needs.

In various implementations, an agent coordinator may facilitate communications among agents, and communications between agents and users or the system. In some examples, the agent coordinator may manage, and monitor operations performed by agents. For example, the agent coordinator may pause an agent if the agent coordinator determines that the agent is committing more errors while processing a task. As another example, the agent coordinator may restart an agent in response to receiving input(s) from a user. As yet another example, the agent coordinator may prevent unexpected input from feeding into an agent if the agent coordinator determines that the unexpected input may mislead the agent to improperly process a task.

Additionally, the agent coordinator may allow bidirectional communications between agents and users or the system. In various implementations, an agent may request additional information from a user or the system after the agent starts processing a request from the user. For example, the agent may request more user inputs from the user, such as a prompt or an accessory, through the agent coordinator. As another example, the agent may request the user to perform one or more actions on the system or other systems external to the system, such as requesting the user to enter entries in a system applications and products (SAP) ordering system before the agent can further proceed with a current task. Advantageously, the bidirectional communications facilitated by the agent coordinator allows users to more efficiently work with agents to meet demands of users.

### Agent Storage

An agent storage may be utilized by an agent to store data and/or information (e.g., accessories, tools, messages, program code, data files, tables, or the like) for processing tasks. For each agent, the system may allocate an agent storage, where an agent may store data and/or information used by the agent to process tasks. For example, an agent may store accessories that are generated by the agent in an agent storage associated with the agent and share pointers that pointed to the stored accessories to other agents such that other agents can access the stored accessories. As another example, the agent may generate or create new tools (e.g., a statistical analysis tool) for processing certain tasks to the agent storage. As yet another example, the agent may be tasked to write a program code (e.g., Python code). The agent may then utilize a tool to find an application programming interface (API) endpoint for generating the program code and store the program code in the agent storage. In various implementations, an agent may have full access to an agent storage allocated to the agent but may have limited access to agent storages of other agents. Based on permissions of the system, an agent or the system may grant another agent access to parts or all of the agent storage of the agent. For example, an agent may share accessories to a child agent to which the agent handoffs a task or a sub-task.

To efficiently utilize an agent storage, an agent may have one or more retention policies that allow the agent to remove outdated data and/or information from the agent storage. For example, the agent may have a message retention policy based on which the agent may determine whether some messages are outdated or no longer useful and can be removed from the agent storage. The message retention policy or any other data retention policies of the agent may be configurable. For example, the agent may configure its message retention policy to one of keep_initial_and_last_n, remove_by_drop, remove_and_add_summary, and the like.

Additionally, an agent may designate some of data and/or information stored in an agent storage to appropriate retention durations based on various criterion. In various implementations, the agent may determine that information contained in an accessory is true for a limited amount of time and assign a shorter time-to-live on the accessory stored in the agent storage. For example, the agent may determine that information contained in the accessory no longer holds true after a currently processed task is completed. Once completing the task, the agent may remove the accessory from the agent storage to release spaces of the agent storage. Removing outdated accessories, messages, and/or other data stored in the agent storages enables agents to more efficiently utilized available and constrained storage resources to preserve capacity for storing useful data and/or information in agent storages.

### Example User Interface Features

The system may further allow users to interact with the system through one or more user interfaces (e.g., a graphical user interface ("GUI") or other types of user interfaces) to allow users to configure agents, interact with agents, and verify results generated by agents. In various implementations, users may configure an ontology, an LLM, tools, accessories, an agent storage, or other aspects of an agent through operating on a user interface. For examples, a user may configure which tools (e.g., a calculator or other tools) the agent can utilize to process tasks. The user may also configure types of child-agents to which the agent may handoff tasks or sub-tasks, and maximum number of handoffs (e.g., a handoff depth) that can be utilized by the agent. Additionally and/or optionally, the user may configure types of LLMs and/or machine learning (ML) models accessible to the agent through the user interface. The user interface may further allow users to view and track various configurations (e.g., through version control mechanisms noted above) that are available to configure an agent or child-agents of the agent. Advantageously, a user may preserve a specific configuration of an agent that is tested to be effective for solving a specific type of problems while experimenting new configurations based on minor or minimal adjustments to the specific configuration without losing the efficacy of the specific configuration.

In various implementations, a user may evaluate or verify results generated by agents through manipulating a user interface provided by the system. In some examples, the user interface may present information related to an individual run. For example, the information related to the individual run may include the initial prompt and subsequent prompts received by the agent from the user, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like. Advantageously, the system may allow users to more efficiently evaluate or verify performances of agents through, for example, reviewing steps or actions taken by an agent to process a task.

Additionally, user interfaces of the system may present information related to accessories utilized by agents to process tasks. In various implementations, a user interface of the system may visualize relationships between accessories utilized by one or more agents for solving some problems. For example, the user interface may present an interactive graphical representation of accessories used by an agent. More specifically, the interactive graphical representation may represent accessories as nodes and relationships of accessories as edges. For example, the interactive graphical representation may visualize a first accessory utilized by an agent to process a task as a first node, visualize a second accessory utilized by the agent to process the task as a second node, and show that the first node is connected to the second node through an edge, where the edge indicates that the second accessory is generated based on the first accessory. Advantageously, the graphical representation of accessories enables users to efficiently review and track what accessories are utilized by agents to process tasks and how an accessory is related to another. Additionally and/or optionally, the system may allow a user to create one or more accessories by operating on user interface(s) provided by the system, where the created accessories may be passed to agents by the system for processing tasks submitted by the user.

### Example Large Language Model Functionality

The system and/or agents of the system may employ one or more LLMs to provide various services. In various implementations, agents may receive user requests to process various types of tasks, such as automatically generating texts to summarize a set of documents, conducting analysis based on data contained in articles, tables, spreadsheets, or the like, scheduling distribution of materials based on supply chain constraints and requirements from demand sides, or the like. For example, agents may allow users to query internal or third-party data using an LLM (e.g., a QA (question and answer) LLM) that is trained to generate answers from user queries. In various implementations, the LLMs utilized by the system and/or the agents may be locally hosted, cloud managed, accessed via one or more Application Programming Interfaces ("APIs"), and/or any combination of the foregoing and/or the like. Data that may be processed by agents through using the LLMs may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

As noted above, the system may provide the flexibility of easily swapping between various language models employed by agents to provide various services through configuring agents. For example, the system may swap an LLM (e.g., switching between GPT-2 to GPT-3) for analyzing information to provide recommendations (e.g., to which distribution centers shipment orders should be placed) based on analyses. Such model swapping flexibility provided by the system may be beneficial in various aspects, such as experimentation and adaptation to different models based on specific use cases or requirements, providing versatility and scalability associated with services rendered by the system.

In other embodiments, the system and/or agents of the system can incorporate and/or communicate with one or more LLMs to perform various functions, such as executing similarity searches to search for data. The communication between the system and the one or more LLMs may include, for example, a context associated with an aspect or analysis being performed by the system, a user-generated prompt, an engineered prompt, prompt and response examples, example or actual data, and/or the like. For example, the system and/or agents may employ an LLM, via providing an input to, and receiving an output from, the LLM. The output from the LLM may be parsed and/or a format of the output may be updated to be usable for various aspects of the system.

### Example Features Related to Data Objects

The system may employ database(s) that uses ontology and data objects to store, represent and/or organize data utilized by the system. The system may capture and synchronize data or information associated with a run (e.g., a full interaction of a user with the system) into an ontology associated with a database. As such, data utilized by the system may be organized and linked to relevant context for providing a comprehensive knowledge base for evaluation, verification, and analysis.

In some embodiments, a body of data may be conceptually structured according to an object-centric data model represented by the ontology. The ontology may include stored information providing a data model for storage of data in the database. The ontology may be defined by one or more object types, which may each be associated with one or more property types. At the highest level of abstraction, data object may be a container for information representing things in the world. For example, data object can represent a document or other data source such as an e-mail message, a news report, or a written paper or article. Additionally, data object can represent an entity such as a person, a place, an organization, a market instrument, or other noun. Data object can further represent an event that happens at a point in time or for a duration. Each data object may be associated with a unique identifier that uniquely identifies the data object within the database of the system.

In various implementations, the system may utilize an "interaction data object" to store information and/or data associated with a run of a user in a database of the system for various purposes. The interaction data object may include data objects or may be linked to data object(s) that represent documents, data sources, timestamps of events (e.g., when one or more user queries of the user are received and/or responded), profiles of the user, or the like that are associated with a user interaction. For example, initial and subsequent prompts from the user and/or steps taken by agents utilized to fulfill objectives of the user can be stored by the system using the interaction data object and/or data objects associated with the interaction data object for later evaluation. The system may utilize the interaction data object and/or additional data objects to automatically generate evaluation reports for various purposes, such as evaluating the performances of agents. Advantageously, interaction data objects stored in the database of the system may enable information associated with the user interaction to be easily reviewable. The system may further utilize information stored using the interaction data object and/or other data objects to evaluate if agents are not processing tasks efficiently.

### Example System and Related Computing Environment

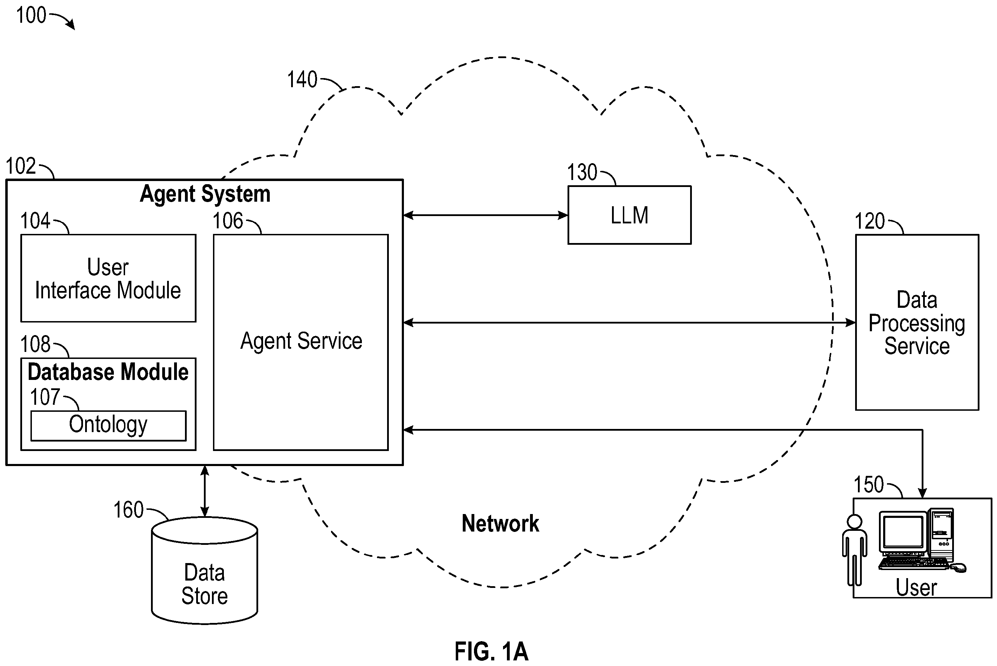

FIG. 1A illustrates an example computing environment 100 including an example agent system 102 in communication with various devices to respond to user inputs. The example computing environment 100 includes an agent system 102, an LLM 130, a network 140, a data processing service 120, a data store 160, and a user 150. In the example of FIG. 1A, the agent system 102 comprises various modules, including a user interface module 104, a database module 108 including an ontology 107, and an agent service 106. In other embodiments, the agent system 102 may include fewer or additional components. In various implementations, the agent system 102 can comprise the system of the present disclosure, in whole or in part. In various implementations, the agent system 102, and/or various aspects or components of the agent system 102, may be considered part of, or comprise, the system of the present disclosure. The system of the present disclosure, in various implementations, may include additional features, aspects, components, and/or functionality.

In various implementations, one or more of the user interface module 104, database module 108, data processing service(s) 120, LLM 130, and/or data store 160 may be comprised, in whole or in part, by the agent service 106. In various implementations, the agent service 106 and one or more of the user interface module 104, database module 108, data processing service(s) 120, LLM 130, and/or data store 160 may be part of a common system and/or computing environment. For example, one or more of the user interface module 104, database module 108, data processing service(s) 120, LLM 130, and/or data store 160 may be outside of the agent service 106, but may be accessible by the agent service 106 in the ordinary course of performing one or more operations, such as described further herein.

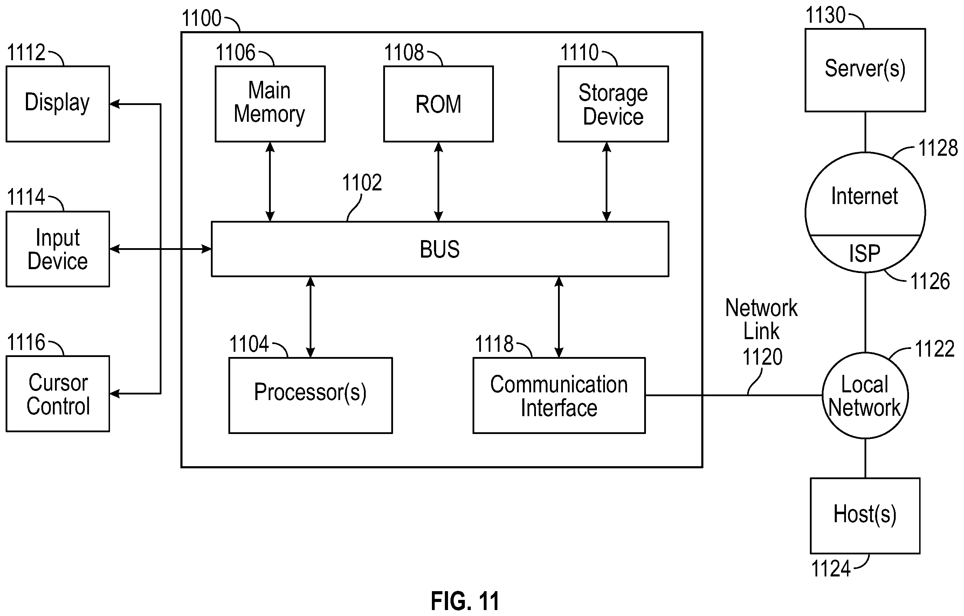

The operations of agent system 102, including user interface module 104, agent service 106, and/or database module 108, can be performed by one or more hardware processors operating under control of computer-executable program instructions which can be stored on non-transitory computer readable media, as shown and/or described in FIG. 11. The agent system 102, including user interface module 104, agent service 106, and/or database module 108, can include and/or be implemented in one or more computing devices including one or more hardware processors such as shown and/or described in FIG. 11.

In the example of FIG. 1A, the various devices are in communication via a network 140, which may include any combination of networks, such as one or more personal area network, local area network, wide area network, over-the-air broadcast network (e.g., for radio or television), cable network, satellite network, cellular telephone network, or combination thereof. As a further example, the network 140 may be a publicly accessible network of linked networks, possibly operated by various distinct parties, such as the Internet. In some embodiments, the network 140 may be a private or semi-private network, such as a corporate or university intranet. The network 140 may include one or more wireless networks, such as a Global System for Mobile Communications (GSM) network, a Code Division Multiple Access (CDMA) network, a Long Term Evolution (LTE) network, or any other type of wireless network. The network 140 can use protocols and components for communicating via the Internet or any of the other aforementioned types of networks. For example, the protocols used by the network 140 may include Hypertext Transfer Protocol (HTTP), HTTP Secure (HTTPS), Message Queue Telemetry Transport (MQTT), Constrained Application Protocol (CoAP), and the like. In some embodiments, modules of the illustrated components, such as the user interface module 104, the database module 108, and the agent service 106, may communicate via an internal bus and/or via the network 140. As additional examples, the network 140 can include a variety of communication protocols, including wired communication, wireless communication, wire-like communication, far-field communication (such as transferring energy via electromagnetic radiation (e.g., radio waves)), Wi-Fi, Bluetooth^{®}, ZigBee^{®}, Z-wave^{®}, cellular telephony, such as long-term evolution (LTE) and/or 1G, 2G, 3G, 4G, 5G, and/or the like, infrared, satellite transmission, proprietary protocols, combinations of the same, and the like.

The user interface module 104 is configured to generate user interface data that may be rendered for a user 150, such as to receive an initial user input or user query, as well as later user input that may be used to initiate further data processing. In some embodiments, the functionality discussed with reference to the user interface module 104, and/or any other user interface functionality discussed herein, may be performed by a device or service outside of the agent system 102 and/or the user interface module 104 may be outside the agent system 102. Example user interfaces are described in greater detail below. As described hereinabove, the user input can include a term, phrase, question, query, and/or statement written in a human language (e.g., English, Chinese, Spanish, and/or the like), a request for data, a task to be performed, information associated with a task to be performed, one or more tools (e.g., a query object tool, an apply action tool, and/or the like), one or more tool types (e.g., an object type, an action type, and/or the like), other context, and/or other information. The agent system 102 (e.g., agent service 106) can receive user input from the user 150 via the user interface module 104. For example, the user 150 may provide a user input indicating a natural language request for one or more tasks to be performed and/or problems to be solved by the agent system 102.

In various implementations, the user interface module 104 allows the user 150 to configure agents, interact with agents, and verify results generated by agents in the agent service 106. The user 150 may configure an ontology, an LLM, tools, accessories, the agent service 106 (and/or one or more aspects thereof), and/or other aspects of an agent through interacting with the user interface module 104. For example, the user 150 may configure which tools (e.g., a calculator or other tools), AI models, and/or data processing services an agent can utilize to process tasks. The user 150 may also configure types of child-agents (also referred to herein as "sub-agents") to which an agent may handoff tasks or sub-tasks, a maximum number of handoffs that can be utilized by an agent, and/or the like. Additionally and/or optionally, the user interface module 104 may further allow the user 150 to view and track various configurations (e.g., through version control mechanisms) that are available to configure an agent or child-agent(s) of the agent. Advantageously, the user 150 may preserve a specific configuration of an agent that is tested to be effective for solving a specific type of problem while experimenting with new configurations based on (minor or minimal) adjustments to the specific configuration without losing the efficacy of the specific configuration.

The user interface module 104, in various implementations, can generate user interface data to render in a graphical user interface (GUI) of one or more devices of the user 150. This can include one or more editable and/or non-editable representations of one or more context items (e.g., user input, prompts, responses, datasets, code repositories, functions, tools and/or related tool information, tool calls, other context, and/or the like) and/or other information that have been previously provided and/or that are potentially going to be provided to the agent service 106 and/or LLM 130. For example, user input can include user interaction(s) with the editable and/or non-editable representations, and user interaction(s) can indicate one or more context items to be provided to the agent service 106 and/or the LLM 130, and/or indicate a modification (e.g., deletion, update, edit, addition to, removal, and/or the like) to at least a portion of said one or more context items. The user interface module 104 can provide the agent service 106 with the one or more user inputs associated with the user interaction(s) with said representations, and in response the agent service 106 can execute one or more tasks and/or sub-tasks, such as to modify the one or more context items. The agent service 106, in various implementations, may automatically (e.g., without additional user interaction) modify the one or more context items and feed said one or more context items to the LLM 130. In some examples, user interaction with the editable and/or non-editable representations can indicate a retrospective modification to at least a portion of one or more context items previously provided to the agent service 106 and/or LLM 130. In this way, the user 150, via the agent service 106, may modify the history (e.g., conversation history) of the LLM 130. Accordingly, the user 150 can modify the state that is passed into the LLM 130 when the agent system 102 (e.g., the agent service 106) calls the LLM 130 in the course of resuming one or more tasks and/or subtasks, and/or performing subsequent tasks and/or sub-tasks.

The database module 108 may be any type of data store and can store any data, data objects of data object types, or the like. The database module 108 is configured to store data/information that may be utilized by the agent system 102 and/or accessed or manipulated by the user 150, as described herein. The database module 108 can include data stored in data store 160, data transferred from data store 160, or access data stored in data store 160. The database module 108 can be indexed according to an ontology 107. Data that may be stored in the database module 108 may include any type of electronic data, such as text, files, documents, books, manuals, emails, images, audio, video, databases, metadata, positional data (e.g., geo-coordinates), sensor data, web pages, time series data, and/or any combination of the foregoing and/or the like. The ontology 107 may constitute a way to represent things in the world. The ontology 107 may be used by an organization to model a view on what objects exist in the world, what their properties are, and how they are related to each other. The ontology 107 may be user-defined, computer-defined, or some combination of the two.

In the example of FIG. 1A, the user 150 (which generally refers to a computing device of any type that may be operated by a human user) may provide a user query, which can include a request to perform a computational task, to the agent system 102 indicating a natural language request for some data analysis to be performed or computational tasks and/or problems to be solved by the agent system 102. For example, the user query along with other supplemental information or instructions, if any, may be provided through the user interface module 104 to the agent service 106. In some embodiments, the user 150 may provide supplemental information (e.g., specifying some constraints on processing results to be generated by the agent service 106, selecting one or more object types to limit processing by the agent system 102 to only those selected object types, or the like) to increase speed and relevance of results provided by the agent service 106 and/or agent system 102, while in other embodiments the user 150 may not provide any information except an initial input. In some instances, the supplemental information can include ontology documentation, which can either be supplied by the user or accessed from the database module 108 or data store 160.

As noted above, the agent system 102 (e.g., the agent service 106) may include and/or have access to one or more large language model (LLM) or other language model, and the LLM may be fine-tuned or trained on appropriate training data (e.g., annotated data showing correct or incorrect pairings of sample natural language queries and responses). After receiving a user query, the agent system 102 may generate and provide, through the agent service 106, one or more prompts to an LLM 130, which may include one or more large language models trained to fulfill a modeling objective, such as task completion, text generation, summarization, or the like.

The LLM 130 and various modules of the agent system 102, such as the agent service 106, may also communicate with one or more data processing services 120 in the course of fulfilling a user query. The data processing services 120 may include any quantity of services (or "plug-ins") and any available type of service. For example, the data processing services 120 may include one or more search services (e.g., a table search service, an object search service, a text search service, or any other appropriate search service), indexing services, services for formatting text or visual graphics, services for generating, creating, embedding and/or managing interactive objects in a graphical user interface, services for caching data, services for writing to databases, an ontology traversing service (e.g., for traversing an ontology 107 or performing search-arounds in the ontology 107 to surface linked objects or other data items) or any other services. For example, the agent service 106 may request for data processing services 120 to perform a specific process. By another example, the data processing service can include an ontology software development kit (OSDK) that can be used to generate ontology documentation based on a documentation template and information indicative of the ontology 107. The OSDK can enable the user 150 to provide user input or by the agent service 106 fulfilling the user input to access and/or update the ontology 107 or data in either of the database module 108 or data store 160. In some implementations, the data processing services 120 may be a part of the agent system 102 (e.g., as part of a data processing services module of the agent system 102).

The agent service 106 may include a plurality of agents that may be utilized by the agent system 102 to solve various problems or process various tasks received, via the user interface module 104, from the user 150. As noted above, agents in the agent service 106 may coordinate with each other to solve problems or process tasks, thereby increasing the efficiency and accuracy of the agent system 102 in processing user inputs from the user 150. Agents employed by the agent service 106 may be configurable based on various settings or parameters. Additionally, configurations of agents can be version controlled by the agent service 106.

Each of the agents may be configurable based on various settings. For example, an agent can be configured or reconfigured to be associated with various ontologies, large language models (LLMs), tools, accessories, storages, and/or the like. The agent service 106 may flexibly (e.g., based on user demands) reconfigure one or more agents from one configuration to another configuration. Advantageously, reconfigurable agents enable the agent service 106 to swap or switch agent configurations to achieve various objectives. For example, the agent service 106 may feed the same input(s) to a first and second agent, but swap LLMs utilized by the agents, such as to evaluate or benchmark performances of the LLMs. In some examples, when an agent is tasked to solve a problem related to a new subject matter, the agent service 106 and/or user 150 may reconfigure the agent to utilize an ontology that is created or updated based on the new subject matter.

In various implementations, the agent(s) in the agent service 106 may coordinate with each other to process tasks collaboratively. For example, a first agent may coordinate with a second agent by handing off tasks to the second agent, where the second agent is suitable or specialized in handling the tasks. More specifically, when the first agent determines that a task that the second agent is processing requires specialized capability, the first agent may handoff some or all of the task to the second agent that has been trained or tested to efficiently solve the task. In various implementations, agents may hand off some (e.g., sub-tasks) or all of a task to one or more child agents, which may specialize in processing specific types of tasks or sub-tasks. Additionally, the parent-child agent relationship can be configurable by the agent service 106. For example, a first agent can be configured to have a second agent as a child agent, where the child agent may be explicitly specified in a configuration of the first agent. A configuration of the child agent may also explicitly specify the first agent as a parent agent. As such, the parent-child agent relationship(s) can be bi-directional. Advantageously, handing off tasks from agents to corresponding child agents can provide multiple improvements over utilizing a single and large agent to process tasks. For example, handing off sub-tasks to child agents that are trained to process the sub-tasks efficiently can enable the agent service 106 to efficiently process requests from the user 150, reducing computational load, storage requirements, and/or compute overhead in generating outputs, and/or increasing the accuracy of said outputs. Handing off tasks may further reduce the update or maintenance cost of agents employed by the agent service 106 because updates on or migration of agents can be targeted and tailored toward subsets of agents of the system.

In various implementations, the agent system 102 can onboard agents. For example, when providing a user input from the user 150, the agent system 102 can designate tasks to one or more agents of agent service 106 to accomplish the task.

The agent service 106 may generate and maintain a log to record events, timelines, received inputs, or generated outputs while agents process tasks or solve problems received from the user 150. In various implementations, agents employed by the agent service 106 may coordinate with other agents by handing off tasks to agents (e.g., child-agents) which are suitable or specialized in handling the tasks. If an agent determines to handoff a sub-task to a child agent (sometimes referred to herein as a "subagent"), the agent may choose to share knowledge with the child agent. For example, the agent may share an accessory with the child agent, where the accessory may be useful in processing the sub-task.

As described further hereinbelow, the agent service 106 may provide storage (e.g., agent storage 126) for agents to store and/or access accessories (e.g., tools and/or related tool information), other context, and/or other information useful for processing tasks or problems. The agent service 106 may further utilize an agent coordinator 124 to supervise handoffs of tasks or sub-tasks among agents to ensure handoffs are robustly performed and do not interfere with processing of other tasks or sub-tasks. In various implementations, the agent coordinator 124 of the agent service 106 may facilitate communications among agents, and communications between agents and users 150 or the agent system 102.

The agent service 106 enables agents to coordinate (e.g., handoff a task from one agent to another) with each other to effectively solve problems received from the user 150 in both time and resource-efficient manners. Additionally, the agent service 106 allows agents to share information useful for processing tasks or solving problems effectively and reliably while respecting security and/or permissioning defined by the agent system 102 and/or the user 150. Further, through the assistance of the user interface module 104, the agent service 106 may allow the user 150 to track or monitor problem-solving processes performed by agents employed by the agent service 106 to evaluate the soundness of steps taken or decisions made by agents. The agent service 106 may further allow the user 150 to configure agents based on various user objectives to enhance scalability and reusability of the agent system 102.

In various implementations, the agent service 106 may receive user queries to process various types of computational tasks, such as image and/or audio processing tasks, machine controlling tasks, tasks involving automatically generating texts to summarize a set of documents, conducting analysis based on data contained in articles, tables, spreadsheets, or the like, scheduling distribution of materials based on supply chain constraints and requirements from demand sides, or the like. For example, the agent service 106 may allow users to query internal or third-party data using the LLM 130 (e.g., a QA (question and answer) LLM) that is trained to generate answers from user queries. In various implementations, the LLM 130 utilized by the agent service 106 may be locally hosted, cloud managed, accessed via one or more Application Programming Interfaces ("APIs"), and/or any combination of the foregoing and/or the like. Data that may be processed by the agent service 106 through using the LLM 130 may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

Optionally, the agent system 102 (e.g., the agent service 106) may be capable of interfacing with multiple LLMs. This allows for experimentation and adaptation to different models based on specific use cases or requirements, providing versatility and scalability to the system. In some implementations, the agent system 102 may interface with a second LLM 130 in order to, for example, solve a problem for the user 150, generate an input to a data processing service 120, or to generate some or all of a natural language prompt (e.g., generate a prompt for the first LLM 130). Additionally, the agent service 106 may optionally include a plurality of agents that may be utilized by the agent system 102 to solve various problems or process various tasks received from the user 150. As noted above, agents in the agent service 106 may coordinate with each other to solve problems or process tasks, thereby increasing the efficiency and accuracy of the agent system 102 in processing user inputs from the user 150. Agents employed by the agent service 106 may be configurable based on various settings or parameters. Additionally, configurations of agents can be version controlled by the agent service 106.

The agent system 102 can onboard computer-based agents (unless specified otherwise, agents refers to computer-based agents). For example, when providing a user query from the user 150, the agent system 102 can designate tasks to one or more computer-based agents to accomplish the task. The agent system 102 can determine supplemental documentation to provide alongside the user query to the computer-based agents as part of the prompt. This supplemental documentation can provide agents with an understanding of the relationships between data objects in the data set and how the agent can utilize the tools it has been configured to have accessible to these data objects. Accordingly, the agent can be provided with similar levels of agency as a human agent, which can be further accomplished based on how the settings of the agent are configured. The settings can include what tools are accessible and what guardrails are provided to the agent to confirm the tools are being used as expected. In some instances, the prompt can be further based on the settings of the selected agent, work flow specifics associated with the ontology, example prompts with sample processes on how to access data objects for the prompt and ideal outputs, a target number of suggestions, agent connections, template response formats on how the agent output or process updates can be provided back to the user 150, guardrails against improper user queries, and/or the like. These additional components can be included as part of the user query and/or the ontology documentation, or can be separate from them. For example, the example questions with sample solutions on how to access data objects for the question can be included as part of the ontology documentation.

In some instances, the supplemental documentation can be readable by a human agent as well or formatted so that it can be more easily understood by the agent. The supplemental documentation can include ontology documentation that is based on data object types defined by the ontology 107, such as functions and/or data object types. The supplemental documentation can be generated by the agent service 106 or generated by another portion of the agent system 102, or by an external system in the computing environment 100. The supplemental documentation can be automatically generated or manually generated by the user 150. The supplemental documentation can be generated based on a subset of the definitions in the ontology 107 that are relevant to the user query provided by the user 150. Furthermore, guardrails associated with the agent or permissions associated with the agent system 102 can limit access to the ontology 107 or data objects defined by the ontology 107 when generating the ontology documentation. Accordingly, agents can be provided permissions similar to human agents to avoid unnecessary access to non-relevant data. In some instances, the supplemental documentation may have already been generated, and the agent service 106 can access the supplemental documentation from the database module 108, the data store 160, or another external data storage.

### Example System and Related Modules

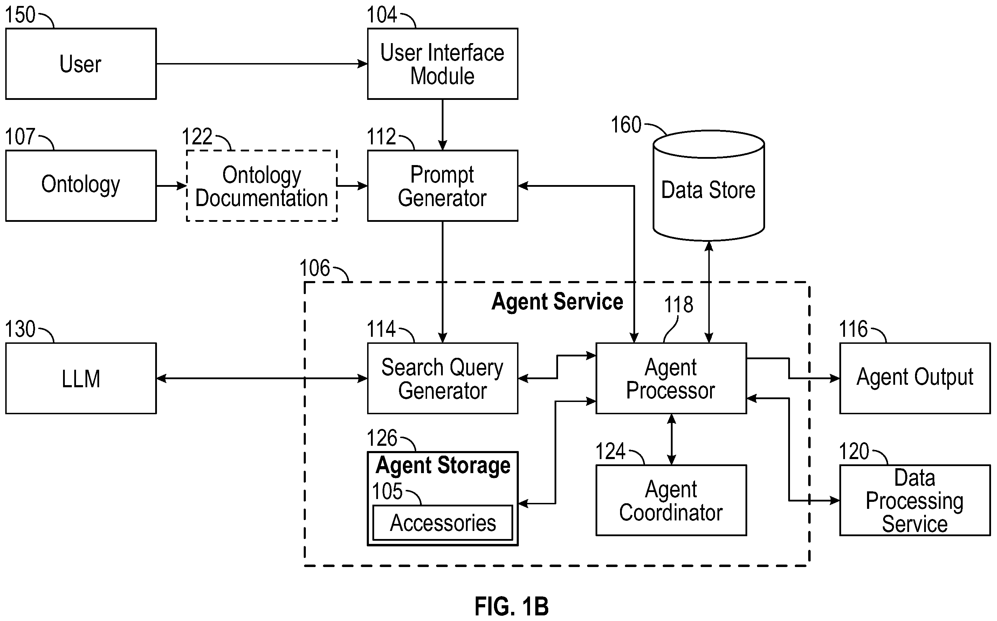

FIG. 1B depicts example connections between various modules associated with the agent system 102 of FIG. 1A, including the user 150, the user interface module 104, the ontology 107, the ontology documentation 122, the prompt generator 112, the data store 160, the data processing service 120, the agent service 106 that includes one or more agent coordinator 124, one or more agent storage 126 including accessories 105, and one or more agent processor 118, the LLM 130, and an agent output 116. In other embodiments, the agent system 102 and/or the agent service 106 may include fewer or additional connections. The indicated connections and/or data flows of FIG. 1B are exemplary of only certain processes performed by the agent system 102 and are not meant to include all possible blocks and participants.

As described above, the user interface module 104 is configured to generate user interface data that may be rendered on the user 150 (which generally refers to a computing device of any type and/or a human user of the device), such as to receive an initial user input, as well as later user input that may be used to initiate further data processing. In some embodiments, the functionality discussed with reference to the user interface module 104, and/or any other user interface functionality discussed herein, may be performed by a device or service outside of the agent system 102 and/or the user interface module 104 may be outside the agent system 102. A user 150 may provide a user query for a computational task to the user interface module 104 indicating a natural language request for some data analysis to be performed and/or tasks or problems to be solved by the agent system 102.

The user query along with other supplemental information or instructions such as workflow context, if any, may be provided through the user interface module 104 to the agent service 106. In some embodiments, the user 150 may provide supplemental information (e.g., specifying some constraints on processing results to be generated by the agent service 106, selecting one or more object types to limit processing by the agent system 102 to only those selected object types, or the like) to increase speed and relevance of results provided by the agent service 106 and/or agent system 102, while in other embodiments the user 150 may not provide any information except an initial input.

The ontology documentation 122 can be supplemental documentation that is based on data object types defined by the ontology 107, such as functions and/or data object types. In some instances, the ontology documentation 122 can be stored in the database module 108, which includes the ontology 107. The ontology documentation 122 can be accessed by the prompt generator 112. The ontology documentation 122 can be generated based on a subset of the definitions in the ontology 107 that are relevant to the user query provided by the user 150. In some instances, the ontology documentation 122 can be re-generated for different subsets of data objects, such as if there is a new search query or user query. The prompt generator 112 can be used to generate a prompt based on the user query and the ontology documentation 122. The prompt can be provided to the agent service 106. The prompt can provide the agent service 106 with the tasks to be fulfilled through the user query the knowledge on how to fulfil the task through the ontology documentation 122.

In the example of FIG. 1B, the agent service 106 includes one or more agent coordinator 124, one or more agent storage 126 including accessories 105, and one or more agent processor 118. In some instances, the prompt generator 112 can be included within the agent service 106. Accordingly, the prompt can be generated by an agent in connection with the agent processor 118. In such instances, the user query and the ontology documentation 122 can be directly accessed by the agent service 106. The search query generator 114 can receive the prompt and generate a search query including one or more tasks to fulfil the prompt. The search query can be based on the ontology documentation provided in the prompt to guide the agent on how to fulfil the user query, including which data objects to retrieve and how. In some instances, the search query can be generated by accessing the LLM 130. The search query can be provided to the agent processor 118 to execute the search query based on the data objects associated with the search query that are stored in the data store 160 or database module 108.

The agent processor 118 can be used for one or more agents or include one or more agent processors 118. The delegation of which agent to handle tasks associated with the search query can be determined using the agent coordinator 124. The agent processor 118 can coordinate with the data processing service 120 and LLM 130 when executing the search query to access external information. The agent processor 118 can retrieve and store data during the execution of the search query in the agent storage 126. The agent storage 126 can include accessories 105 that can be accessed by the agent processor 118 to provide the agent with tools to execute the search query. For example, the agent can use the ontology documentation 122 for instructions on how to provide the agent with advanced tools to perform complex tasks. The OSDK provides the agent with the ability to efficiently interact with the data objects defined by the ontology 107 with minimal hallucinations. After the agent executes the search query, the agent processor 118 can generate an LLM output. Depending on the results of the LLM output, the agent service 106 can generate another search query with the new information if needed to fulfil the user query. In some instance, the agent processor 118 may determine that a new prompt needs to be generated by the prompt generator 112, which can be based on the prior LLM output. In other instances, the agent processor 118 can determine that further input is required from the user 150. The prompt generator 112 may then generate a new prompt based on the user input provided.

In some instances, the agent service 106 may go through multiple iterations of search queries, user queries and prompts, or tasks within search queries before fulfilling the user query. In other instances, the agent service 106 may provide an agent output 116 that fulfils the user query in only one iteration of search query. The agent output 116 can further include information associated with the process to achieve the agent output 116. The agent output 116 can further include learnings and insights that can be useful for future agent sessions.

In various implementations, the agent storage 126 may store accessories 105 that may be useful or necessary for agents to process tasks. Accessories 105 may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. Accessories 105 may be permissioned and/or subject to various security constraints such that the accessory may be accessible to some agents but inaccessible to other agents. Accessories 105 may be generated or created by agents during processing tasks, but may also be provided by users based on demands of users. Additionally and/or optionally, accessories 105 may be created by agents using tools while processing tasks. In various implementations, the agent storage 126 may impose a time-to-live constraint on the accessories 105 based on characteristics of the accessories 105.

In addition to accessories 105, agents may also store and/or access tools for processing certain tasks or generated results to the agent storage 126. For example, the agent may be tasked to write a program code (e.g., Python code). The agent may then utilize a tool stored in the agent storage 126 to find an application programming interface (API) endpoint for generating the program code, and store the program code in the agent storage 126. In various implementations, the agent storage 126 may be partitioned and allocated to agents.

In various implementations, the agent service 106 may utilize the agent coordinator 124 to supervise handoffs of tasks or sub-tasks among agents to ensure handoffs are robustly performed and do not interfere with processing of other tasks or sub-tasks. Additionally and/or optionally, the agent coordinator may manage handoffs among agents based on input(s) from the user 150. Additionally, the agent coordinator may allow bidirectional communications between agents and the user 150 or the agent system 102.

In various implementations, the user interface module 104 allows the user 150 to configure agents, interact with agents, and verify results generated by agents. The user 150 may configure an ontology 107, an LLM 130, tools, accessories 105, the agent storage 126, or other aspects of an agent through interacting with the user interface module 104.

### Example Database and Data Models

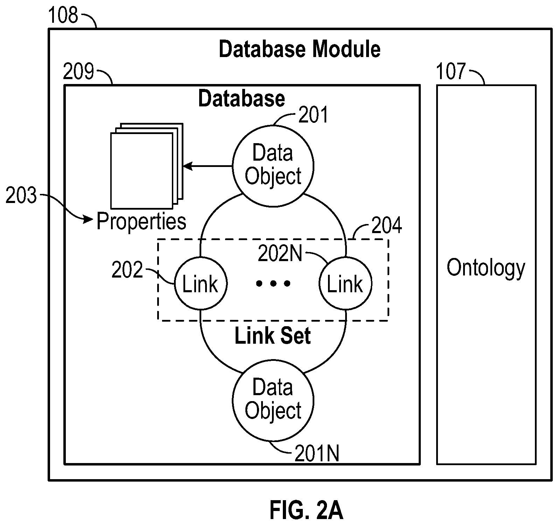

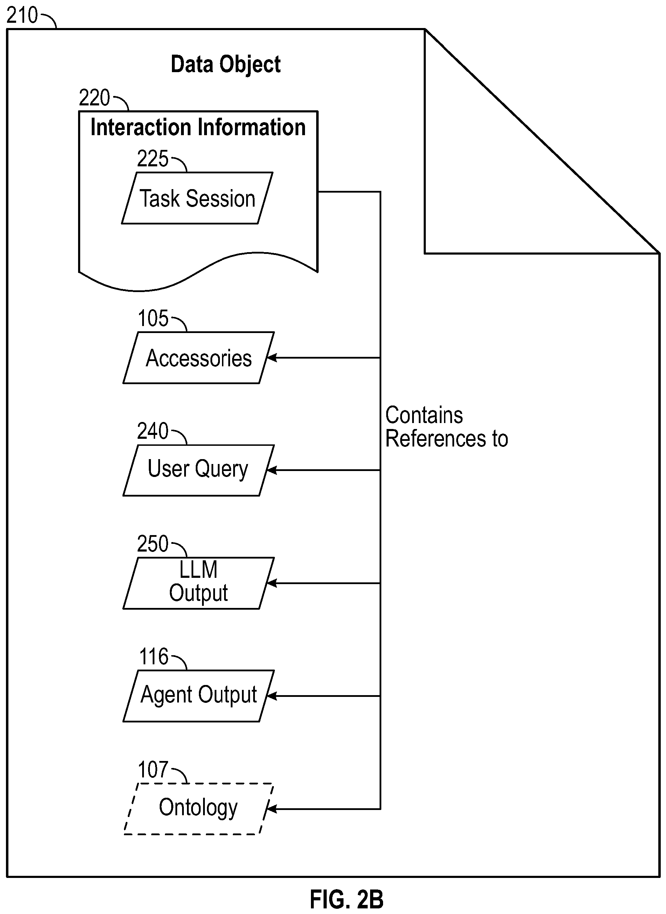

FIG. 2A illustrates an example embodiment of an object-centric conceptual data model, such as may be comprised by the database module 108, in various implementations. An ontology 107, as described hereinabove, may include stored information providing a data model for storage of data in the database 209. The ontology 107 may be defined by one or more object types, which may each be associated with one or more properties 203 or property types. Data objects 201 through 201N are containers for information representing things in the world. In various implementations, data object 201 (see FIG. 2B, for example) can represent information and/or data associated with a run of the user 150. In various implementations, data object 201 can represent a document or other unstructured data source such as an e-mail message, a news report, or a written paper or article. In various implementations, data object 201 can represent a query submitted by the user 150 or a response provided by the agent system 102 to the user 150. In various implementations, data object 201 can represent an entity such as a person, a place, an organization, a market instrument, or other noun. Data object 201, in various implementations, can represent an event that happens at a point in time and/or for a duration. Each data object 201 is associated with a unique identifier that uniquely identifies the data object within the database module 108.

FIG. 2B is a block diagram illustrating an example embodiment of a data object 210 that is optional with various implementations of the present disclosure. The data object 210 may be stored in the database 209 of the database module 108. In various implementations, the agent system 102 may utilize the data object 210 to store interaction information 220, which can include information and/or data associated with a run of a user 150. The data object 210 may include other data objects and/or may be linked (e.g., using the link 202 and/or 202N in link set 204) to other data object(s) that represent documents, data sources, timestamps of events (e.g., when one or more user queries of the user 150 are received and/or responded), profiles of the user 150, or the like that are associated with a user interaction of the user 150. For example, initial and subsequent user input from the user 150 and/or steps taken by one or more agents utilized to fulfill objectives of the user 150 can be stored by the agent system 102 using the data object 210 and/or data objects associated with the data object 210 for later evaluation. The agent system 102 may utilize the data object 210 and/or additional data objects 201 through 201N to automatically generate evaluation reports for various purposes, such as evaluating the performance (e.g., compute efficiency) of agents. Advantageously, data objects 201 through 201N stored in the database 209 may enable information associated with a user interaction to be easily reviewable. The information stored in the data object 210, as described, can also be stored in different components of the agent system 102 or an external system.

In various implementations, the interaction information 220 can include information and/or data associated with a task session 225. The interaction information 220, in various implementations, may include references to at least a portion of accessories 105, user query 240, LLM output 250, agent output 116, and/or ontology 107. For example, interaction information 220 may: (1) identify accessories 105 that are utilized by agents while processing tasks in a run of the user 150; (2) identify user query 240 that may be submitted by the user 150 in the run of the user 150; (3) identify LLM output 250 that may be generated by the LLM 130 in response to receiving (e.g., via agent service 106) a prompt; and/or (4) identify ontology 107 that the agent service 106 and/or LLM 130 may traverse in providing an agent output 116 to fulfill a user query 240 from the user 150. In various implementations, the LLM output 250 can include a search query and/or outputs for executing the search query. In various implementations, the LLM output 250 can include program code that is generated using the ontology documentation 122 based on the search query to access data objects and produce an output.

It is to be noted that the example embodiment of data object 210 shown and/or described in FIG. 2B is not intended to limit the present disclosure and is optional. Accordingly, the interaction information 220 can also be optional, and at least a portion (if not all) the interaction information 220 and/or related information can be comprised, in whole or in part, in a different component of the agent system 102 or by an external system, or may not be included at all.

Additionally, while the data object 210 is an example of a particular type of data object 201 that may be stored by the system, in various implementations, and as described herein, the system may store any type of data object. Such data objects and associated links among data objects can include various information, data, and/or properties, that may be useful in various processes of the system. For example, such data objects can include information and data usable for enabling answering of prompts, queries, and/or the like.

### Example Functionality and Operations of the System

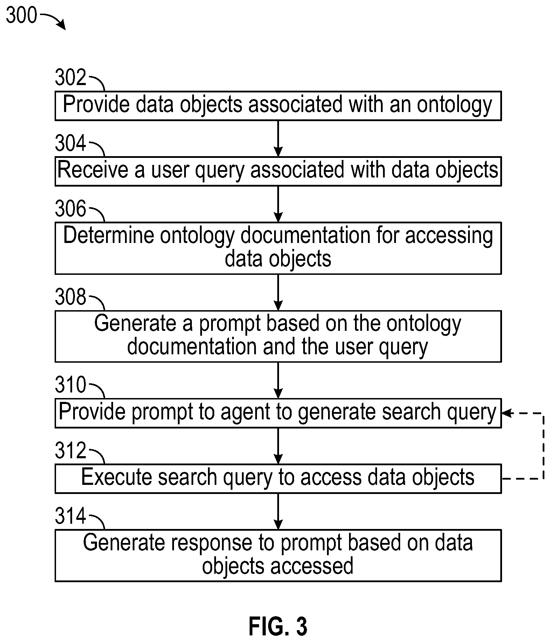

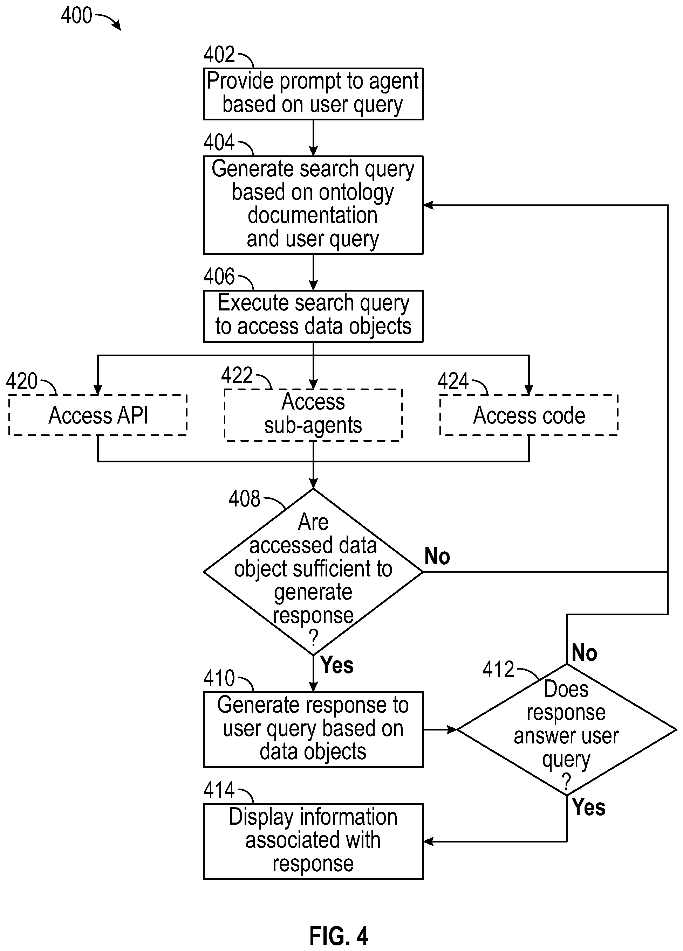

FIGS. 3 and 4 show flowcharts illustrating example operations of the agent system 102 (and/or various other aspects of the example computing environment 100), according to various implementations. The blocks of the flowcharts illustrate example implementations, and in various other implementations various blocks may be rearranged, optional, and/or omitted, and/or additional block may be added. In various implementations, the example operations of the system illustrated in FIGS. 3 and 4 may be implemented, for example, by the one or more aspects of the agent system 102 (e.g., the agent service 106), various other aspects of the example computing environment 100, and/or the like.

FIG. 3 depicts a flowchart illustrating an example method 300 according to various implementations. The method 300 may be implemented, for example, by the agent system 102 of FIGS. 1A and 1B to employ one or more agents to automatically solve complex problems provided by a user query 240 based on ontology documentation 122.

At block 302, the system may provide and/or store data objects, or a set of data objects, that are associated with the ontology 107. The ontology 107 can include definitions of data object types of data objects of the set of data objects. The data objects can be stored in the database module 108, data store 160, or another database external to the agent system 102. For example, the data objects can be associated with production by a machine production company, including, but not limited to, projects completed by the company, cost for each project and/or sub-project, time spent for tasks for the project, and/or the like.

At block 304, the system may receive a user query 240 from the user 150. The user query can be associated with the data objects described in block 302. In some instances, the data objects being provided at block 302 can occur after receiving the user query 240. The user query can include tasks such as, but not limited to, automatically generating texts to summarize a set of documents, conducting analysis based on data contained in articles, tables, spreadsheets, scheduling distribution of materials based on supply chain constraints and requirements from demand sides, or the like. In various implementations, the user 150 may submit the user query 240 through interacting with the user interface module 104. For example, the user query 240 can be to "determine bottlenecks in the production process."

At block 306, the system can determine supplemental documentation for a user query 240 with instructions, examples, and/or information that may improve the effectiveness (e.g., accuracy and/or relevance) of an output from an agent. The supplemental documentation can be ontology documentation 122, which can be indicative of a method for accessing data objects of the set of data objects and specific to the ontology. In some instances, the ontology documentation 122 can be associated with the user query 240, limiting information to data objects that are relevant to the user query 240. The ontology documentation 122 can include information that is usable by an agent to interact with the ontology and data objects. The ontology documentation 122 can be generated in connection with an ontology software development kit (OSDK). Optionally, the ontology documentation 122 can be similar to the interaction information 220, described in FIG. 2B, to provide an agent information on how it can communicate with (e.g., access, modify, and/or the like) the data objects and ontology 107. For example, the ontology documentation can include information about the data objects associated with production by the machine production company and how to interact with those data objects, such as how the agent can communicate through and utilize applications that access the data objects. These applications can be external applications separate from the agent system 102. For example, the applications can be in connection with the data processing service 120 to utilize services that can be used to access the relevant data objects. The data objects included can be limited to those associated with how to determine bottlenecks using the LLM 130. These data objects can be determined based on the ontology documentation 122, which is specified from the template documentation based on the information indicative of the ontology.

The ontology documentation 122 can be automatically generated based on a documentation template and information indicative of the ontology 107. The information indicative of the ontology 107 can include indications of definitions of data object types of the ontology. In some instances, the ontology documentation 122 can be manually generated. As described above, the ontology documentation 122 can include information on how data objects, their properties, and their relationships can be accessed, such as how to read the data objects, how to write data objects, and how to manipulate values associated with them. The ontology documentation 122 can be specific to the ontology associated with the user query 240. In comparison, the documentation template used to generate the ontology documentation 122 can include all functions for any data object type. The information indicative of the ontology 107 can be used to generate the ontology documentation 122 by narrowing the documentation template to only the data object types defined by the ontology. The ontology documentation 122 can be generated prior to receiving the user query 240, and can be stored in the database module 108. In some instances, the generated ontology documentation 122 can be provided to the agent service 106. In some instances, the ontology documentation 122 can be re-generated during a run if the system determines that different data object types are needed, such as from the result of a search query.

At block 308, the system can generate a prompt to provide to an LLM-based agent. The prompt can include the ontology documentation 122 and the user query 240. As described above, in various implementations, the prompt can be enabled and/or generated by an agent and/or the agent service 106. In such instances, the user query 240 and ontology documentation 122 can be provided to the agent, and the agent can generate, and/or enable generation of, the prompt.

At block 310, the system can provide the prompt to the LLM-based agent to cause generation of a search query. The search query can be based on the user query and the ontology documentation 122. The search query can be based on an action plan to provide a first step on how to respond to the user query 240. In some instances where the agent generated the prompt, the agent can use that prompt to generate a search query or delegate generating the search query to another agent or sub-agent using the agent coordinator 124. For example, the action plan can be "what do I need to do" to answer the user query 240, which can include determining "what processes are there" or "how many machines are being built each year. The system can include these questions as the basis to generate a search query or as multiple search queries. In some instances, the system can generate a single search query with a single task.

The system can generate a search query to accomplish a task based on the ontology documentation 122. The system can determine how to generate a particular search query for a particular dataset that is defined by a particular ontology, because the ontology documentation 122 (which can be generated based on the ontology, as described herein) can include examples of various types of search queries (including, for example, formatting, function names, API details, and/or the like) that are specific to data sets that are defined by the particular ontology. The search query types an formatting can be for any type of search queries, for any type of database or data store. As one example, if the database type is relational, then the ontology documentation can include search query examples for formulating SQL queries that are specific to the data objects that are defined by the ontology and stored in the relational database. Similar approaches may be applied to different database and data store types, including, for example, various types of distributed databases and data stores. In the SQL example, the system can generate a corresponding search query in SQL syntax according to templates or examples in ontology documentation, which can be generated based on the ontology and template documentation for SQL-formatted data. The search query can be formatted as program code, a function, and/or the like, such that when executed, it accesses the data objects that the search query is formatted to access. For example, the search query can be formatted in a particular format, such as for ontology-based data, SQL, and/or the like, and can be used to, but not limited to, accessing data, converting data, format data (such as in a Markdown format per data object type), reading/writing/printing data, evaluating data. For example, the user query and/t data processing task can be intended to "find the top 3 customers with the highest projected revenue in Florida for machine production.," and to accomplish this task, the system can generate the search query as a code, such as:

```
      "top_customers = customers.order_by(Customers.projected_net_revenue.
      desc()).take(3)
      
```

for customer in top_customers:

```
        print(f"Customer ID: {customer.customer_id}, Revenue:
      ${customer.projected_net_revenue}")
      python_objects['top_florida_customers'] = {
        'description': 'Top 3 customers in Florida by projected net revenue',
        'type': 'json',
        'python_object': [{
            'id': c. customer_id,
            'revenue': c.projected_net_revenue
          } for c in top_customers
        ]
      }"
```

This code for the search query can be generated based on the ontology documentation (or similar documentation), that can provide a template of code and/or functions to assess data object types, compare data object types, and/or the like. Such search queries can include syntax for ontology-based data from the ontology documentation 122 using data object types such as "customer net revenues" with a property of "Florida" from the data sets. These tasks may be, by not-limiting example, to "access production properties of machine object types," "access relationships for similar processes for machine object types," "determine number and types of processes based on shared production properties machine object types that share a process relationship" to determine "what processes are there." Each of these operations in the search query can be a single task or multiple tasks. In some instances, the search queries and their tasks are the action plan. The questions provided by the action plan can be generated to provide an output to the user 150 on what process the system is undergoing. In some instances, the system can prepare multiple tasks within the same search query if the tasks do not rely on the results of the other inquiries.

The system can assign tasks or search queries to agents and/or tools through the agent service 106 and utilize one or more agents to process one or more tasks or search queries. For example, the agent system 102 may provide the agent service 106 that includes the agent processor 118 to process tasks and/or requests from the user 150. As noted above, agents may coordinate with each other to process tasks or requests from the user using the agent coordinator 124. Agents may share information that is useful (e.g., the accessories 105) for processing tasks, user requests, or problems with each other according to security and/or permissions defined by the agent system 102 or the user 150.

By using an OSDK, which can include the template documentation and information indicative of the ontology 107, the agent increases the tools accessible and accordingly increases the level of agency provided by the agent system 102. The agent is able to perform more complex tasks that may not be possible without the OSDK. The OSDK enables the agent to communicate with the data objects and ontology 107 in the agent's preferred language, which can be programming code such as Python, which can be used by the agent to perform one or more tasks associated with the search query. An agent system without an OSDK may be limited to simpler tools that review and analyze data. An agent without access to the OSDK may not have the tools to accomplish this request or may need several user queries 240 to arrive at the answer. Although the non-OSDK agent (e.g., an agent that does not have access to the OSDK) might be able to comprehend the user query 240, it may not have the tools to reliably process the one or more tasks needed to answer the user query 240. As described further in Figure 4, the agent system 102 is enabled by the OSDK to interact with data objects associated with the search query to generate an LLM output 250 based on the ontology documentation 122, which can be based on the OSDK. In some instances, a non-OSDK agent may need to be provided with user queries to pre-compute metrics associated with the data objects that an agent with access to the OSDK may automatically generate using search queries determined from a user query.

For example, for the user query 240 requesting "determine bottleneck in the production process of machines," the agent (or system) can determine an action plan for what needs to be determined to answer the user query 240. This action plan can include how to simulate each production process and compare efficiencies to prior processes. Then, based on the action plan, the agent can generate a search query to "access properties associated with production for the machine data objects."

At block 312, the system and/or the agent service can cause the LLM-based agent, and/or a search tool of the system, to execute the search query, such as to access data objects of the data object type relevant to the user query 240. An agent can enable execution of the search query to obtain the properties associated with production. The system may then return to block 310 to generate another search query that determines links for similar production processes between the machine data objects. In some instances, this second search query may have been part of the first search query rather than a separate search query. After obtaining this information by executing the search query at block 312, the system can return to block 310 to generate another search query to access machine data objects, which can be sampled from the databases or provided to the system, and simulate a production process based on the earlier retrieved production properties and generate new data objects associated with production efficiency. After executing the search query at block 312 to simulate each process and retrieve the production efficiency data objects generated from the simulation, the system may return to block 310 to then generate a search query to access and compare the retrieved production efficiency data objects with production efficiency data objects that were previously associated with the machine data objects. If there are not already such data objects, the system may generate search queries at block 310 to access previous production properties and simulate production of the machine with the prior processes.

After one iteration, or multiple iterations, of generating search queries at block 310 and executing search queries at block 312, the system can access data objects that can be used to generate a response to the user query 240, such as accessing production efficiency data objects, relationships to prior production efficiency data objects, and relationships between the production efficiency data objects. In some instances, only one iteration of generating and executing a search query may be needed. For example, in one instance, the user query 240 may not require updating or writing data objects and may only need to read data objects, which may be accomplished in one iteration. In another instance, the search query may include multiple tasks that each access data objects, but would not require generating another search query. For example, if the data objects accessed by one task do not require verification or review to generate the next task, such as reading properties of a data object and then averaging the values. In some instances, the system can run into an error during accessing of the data objects, and in which case, another search query may need to be generated. For example, when attempting to read the properties of the machine data object, the properties do not exist. Accordingly, the execution of the search queries can be used to access data objects associated with providing a response to the user query 240.

However, an agent without access to the OSDK may be unable to simulate the processes as it may not be able to accurately achieve the results of the aforementioned search queries without the ontology documentation 122 or OSDK. Rather, the non-OSDK agent may require a user queries or inputs to provide metrics that the non-OSDK agent would otherwise be unable to retrieve or simulate. In many instances, the non-OSDK agent may not be able to complete the task. In such instances, the non-OSDK agent may provide hallucinated outputs because it lacks the capacity to accurately retrieve data objects, write to the data set, or understand the ontology 107.

At block 314, the system can generate a response to the prompt based at least in part on the data objects that were accessed using the search query, during execution of the search queries in block 312 that were generated in block 310. The LLM outputs 250 produced for each search query can provide metrics and data objects that are useful to either generate follow up search queries or in determining the agent output 116 to fulfil the user query 240. The response, or agent output 116, can be the aggregation of the one or more search queries performed by the agent. The agent output 116 and/or the processes to produce the LLM output 250 can be based on the template response formats provided to the system. The template response formats can be part of the ontology documentation 122 and/or the user query 240. In some instances, the agent output 116 can be text providing a solution to the user query 240, an action taken in association with the user query 240, an application generated as requested by the user query 240, and/or the like. In some instances, a single search query can provide the response to the user query 240, such that the LLM output 250 is the agent output 116. For example, the agent output 116 can be "Process five is running slower than typical, there is a new sub-process that was implemented within the last year in process five that is associated with the slower speed."

By further example, the agent can provide to the user interface module 104, a request asking the user 150 if they would like to update the sub-process. In other instances, the system can automatically make the adjustment. In such instances, the system may have generated a search query at block 310 to write data objects to make the adjustments, and executed the search query at block 312. In such instances, the system may provide an option to the user 150 to reverse the adjustment. Automatic and/or requested adjustments can also occur during the run by the agent as it fulfils search queries, for example, if it cannot proceed with fulfilling the user query 240 without making a change. In some instances, the response generated by the system can include the processes, errors, LLM outputs 250, and/or the like. For example, the system can provide an output to the user 150 on the process including, but not limited to, explanations on what the agent is trying to achieve with each search query or with each task, an interpretation of the results from executing the search query, clarification or requests for additional information as needed, and/or the like. The interpretation of the result can include an interpretation of an output from code executed as part of executing the search query.

FIG. 4 is an example flowchart depicting an example method 400 for the agent system 102 generating and displaying a response in response to the agent receiving a prompt according to various implementations. In various implementations, the method 400 may be performed in part or in full by the computing environment 100 of FIGS. 1A and/or 1B. It should be noted that not all of the blocks of FIG. 4 have to be performed. The example method can provide additional information associated with blocks 310, 312, and 314 as described in FIG. 3.

At block 402, the system may generate a prompt for providing to an LLM-based agent, similar to that described in block 310. At block 404, the system may generate a search query, similar to that described in block 310. The search query can be based on the ontology documentation 122 and the user query 240. As described above, in some instances, the search query can be an action plan to answer the user query 240.

In some instances, the search query can further be based on workflow context, such as statistics associated with the prompt. This workflow context can be based on similar user queries 240 or tasks performed by agents associated with the agent coordinator 124. The workflow context can provide typical functions and performances associated with the tasks.

Optionally, the system can delegate which agent to perform the search query or tasks associated with the search query using the agent coordinator 124. Each agent can be configurable through a set of settings associated with data object types for the one or more data objects. Accordingly, particular agents may be more adept at handling certain classes of tasks. Conversely, some agents may not be capable to perform some tasks.

At block 406, the system may cause execution of the search query to access data objects of the set of data objects, similar as described in block 312 in FIG. 3. The agent processor 118 can use the ontology documentation 122 to perform a series of retrievals of data objects stored in the data store 160 or database module 108. The agent processor 118 can access tools and/or accessories 105 to execute the search query and interact with the retrieved data objects. Optionally, the system can generate one or more artifacts associated with at least one of the generation or the execution of the search query. If the search query includes more than one task, each of the tasks can be executed in parallel or in series. Each of blocks 420, 422, and 424 can be completed for each of the tasks.

Optionally, at blocks 420, the system may cause execution of the search query using an application programming interface ("API") to access the one or more data objects for the LLM 130. The APIs can be called by the agent processor 118 using the data processing service 120. In some instances, the API can be used to generate program code, as further described in block 422.

Optionally, at blocks 422, the system may access sub-agents or other agents through the agent coordinator 124. The agent service 106 can have an agent hand off tasks associated with the prompt to a plurality of sub-agents, with the agent causing execution of the search query by handing off at least a portion of the search query to one or more sub-agents to execute instead. The agent can then generate at least a portion of the response by receiving the response from the sub-agents. As described above, the agent can be configurable through a first set of settings, and the sub-agents can be configurable through a second set of settings that is different from the first set of settings.

Optionally, at block 424, the system may cause execution of the search query by accessing program code. The code can be a preferred language by the agent processor 118, such as Python, Java, TypeScript, cURL, and/or the like. The code can be generated by the system from the search query using the ontology documentation 122, which is formed from an ontology software development kit ("OSDK"). The agent can process the code to access the data objects associated with the search query, which can be used to fulfill the task associated with the search query. During the execution of the search query, artifacts can also be generated. As described above, the agent can generate program code as part of executing the search query. The program code can be based on the ontology documentation 122, which can provide a syntax for the preferred language of the agent as a code template. This code template can differ based on the language, but each of which is intended to access data object of the data object types described in the code template.

Executing the search query can include parsing through the ontology documentation 122 to determine the code template that achieves the desired task(s) of the search query. For example, if the search query is to "determine the average cost to build machines from 2010-2020," then the code template can be for reading a property of a data object type and averaging the value of the accessed property values. The system can update the code template, which can include placeholder data object types and relationships, with the specific data object types that are relevant to the data objects associated with the search query.

Referring back to the example, the code template can be a single code template or multiple code templates, such as one for retrieving the data object type, another for reading the property, and another for averaging the values. Similarly, the generated program code for the search query can combine the code templates or it can generate a set of program code for each code template. In the latter instance, the search query can thus comprise three tasks, each with program code correlating the respective code template with the desired data object type, property, or relationship. In some instances, the generation of the program code can further be based on example prompts provided to the agent with sample processes on how to access data objects for the prompt and ideal outputs. These example prompts can inform the system on how to utilize the ontology documentation. In some instances, the generation of the program code can further be based on template response formats on how the agent output or process updates can be provided back to the user 150. The template responses can inform the system on how to generate code that provides a desired format for the responses to the user 150. As described above, the example prompts and/or the template responses can be included as part of the user query 240 or ontology documentation 122.

At block 408, the system may determine whether the accessed data objects accessed during execution of the search query (and its tasks) are sufficient to generate a response to the user query 240. If the data objects accessed are not sufficient, then the system can proceed back to block 404 to either generate another search query or proceed with the next search query in the action plan. In some instances, the system can generate or update a log during the execution of the search query. In some instances, the log can be used in conjunction with a check function, which can prevent the system from proceeding to block 410 to generate a response unless the checker function is passed. The log and checker function can be stored in the agent storage 126. In some instances, the system can generate artifacts during the execution of the search query. The log and/or the artifacts can be used to generate the next search query. By preventing the system from proceeding to generate a response unless the checker function is passed, the system can reduce wasted computational resources associated with incorrect or inaccurate responses to a search query.

If there was an error that prevented fulfilling the search query or any of the tasks in the search query, the system can also proceed back to block 404 to generate another search query. The new search query can further be based on the prior search response or error. For instance, if search query was attempting to access a portion of a data object that was not present, the system can generate a new search query to try to write in that data object. The response can be further based on artifacts during the execution of the search query or prior search queries. In some instances, the artifacts can be stored as artifact data objects, such as in the agent storage 126, and can be moved up to the data store 160. These artifact data objects can be accessible to other agents. The response can further be based on the log. If the data objects outputted by the system correspond with the expected results of the action plan, the system can move on to block 410. At block 410, the system may generate a response to the user query 240 based on the data objects that were accessed during the execution of one or more search queries. As described above, in some instances, the response can be formatted based on the template response formats received by the system. Optionally, at block 412, the system may evaluate whether the response answers the user query 240. This can be a final check function to prevent hallucinations. For example, the system can compare the response with example prompts with sample processes on how to access data objects for the prompt and ideal outputs. If the response does not answer the user query 240 or fails the check function, the system can proceed back to block 404 to generate another search query. The new search query can further be based on the prior response. At block 414, the system may receive and display information associated with the response as an agent output 116, which can be in an interactive graphical user interface (GUI). The information can include a process visualization, which can be generated by the agent based on the artifacts. The information in the agent output 116 can include the response, processes, and/or the like. The information can provide midpoint evaluations to the user 150 on how the agent run is. In some instances, the information can include requests for user input to update the data objects or confirmation for updates that occurred during execution of the search query. In some instances, the processes during the generation of the prompt and search queries, and the execution of the search queries, can be displayed to the user 150 as they occur or shortly after. In some instances, the information in the agent output 116, including the response and the process, can be formatted based on the template response format on how the agent output or process updates can be provided back to the user 150.

### Example Ontology-based Agentic Capabilities

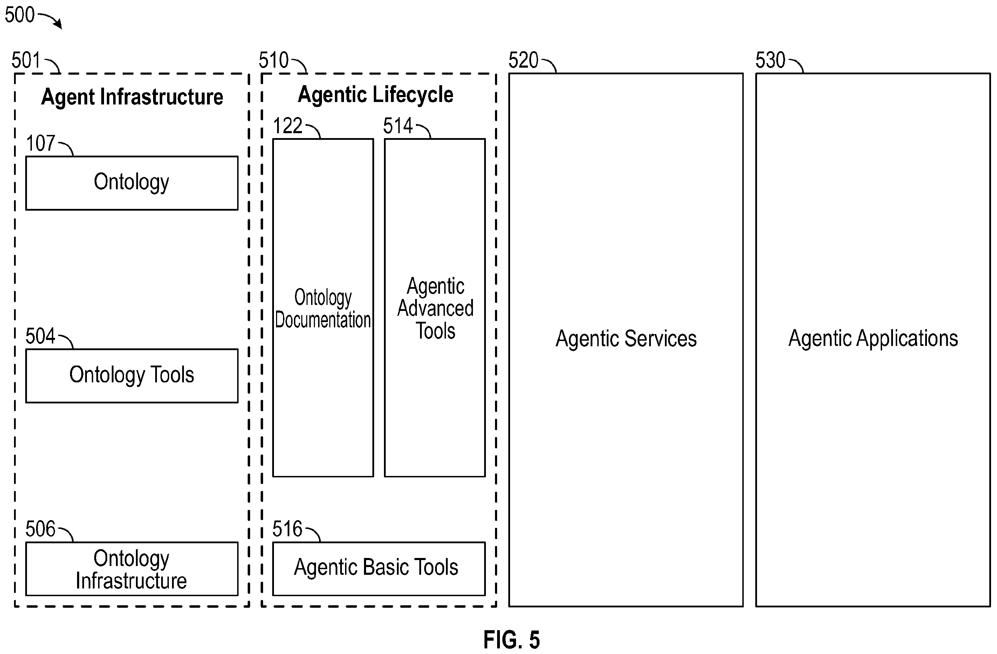

FIG. 5 is an illustration of various aspects of the system and an example operating environment 500 of the system, according to various implementations of the present disclosure. FIG. 5 illustrates, from left to right, various features and an example progression from aspects that may be part of core ontology 107 and core system or tool functionality and infrastructure, to more workflows and higher-level functionality that use the agents.

Staring at the left column of FIG. 5, the agent infrastructure 501 can include, for example, features, data, and functionality to enable agents to effectively and efficiently function, and can include various contexts. Such context can include, for example, the ontology 107, which can assist in curating and managing the context for agents. The ontology 107 can include data objects (and data object types) and relationships, statistics and insights related to processes, causality related to various processes and data objects (as may be determined, for example, from logs of processes, and/or the like), user inputs (e.g., institutional knowledge and guidelines), and/or the like. The agent infrastructure 501 can include ontology tools 504 that can be accessible to the agents to interact with the data objects defined by the ontology 107, which can advantageously provide an infrastructure for the agents to perform various actions and orchestrate complex actions. The ontology tools 504 can include functions, compute modules, data connections, ontology actions or writebacks, embedding and vector stores, multimedia data stores and transforms, automations, machine learning model simulation and analytics, finite state machines and process mining, time series and streaming, visualization and dashboarding, external tool integration, and/or the like. The agent infrastructure 501 can further include ontology infrastructure 506 that can assist in building trustworthy agents, which may be less susceptible to hallucinations. The ontology infrastructure 506 can further provide various permissions for agents, information about costs and scaling of resources, tools and egress controls, interactive computations, LLM integration, complex deployment infrastructures, and/or the like.

Referring to the next column of FIG. 5, agent lifecycle 510 can include tools for performing actions by the various agents, utilizing the ontology 107 and other infrastructure features. The agentic advanced tools 514 and agentic basic tools 516 can be accessed by the agent based on the agent infrastructure 501, such as context describing which tools are specific to the task provided by a user query. By accessing the specific tools, the agent can be more efficient in time and power consumption, as compared to an agent that attempts to use all tools to solve the user query. The system can enable the building of and management of a full agent lifecycle 510 of an agent or one or more agents. The agent lifecycle 510 can be based on agentic advanced tools 514 that provide rigorous tools usable to build, align, and monitor agents that are configured to perform more complex tasks. Accordingly, without the proper tools, an agent may not be capable of actually solving a user query. For example, an agent may be tasked with organizing a data set by a user query, but if the agent only has read access tools and not write access tools, then the agent would be incapable of completing the task even if it understood the task and where to look for the data set based on the context. The agentic advanced tools 514 can include pathways for registering the agent or libraries; defining what an agent is; defining access, parameters of, and/or decisions an agent can make; how to log and/or keep observability into the decisions the agent has made over time, the biases in it, the tendencies for it to do something well versus not well, and/or the like; evaluations of the agent; drift in the agent overtime (e.g., with regards to effectiveness); and/or the like. The agentic advanced tools 514 can provide for multi agent networks where particular agents can be really good at specific things (and/or evaluated to be good at specific things), and orchestration/orchestrator agents can accordingly pass these tasks to other agents which have their context and evaluations optimized for a specific problem. The agentic advanced tools 514 can include features and functionality for improvement in agents over time, and can include agent memory for agents to read and write to those memory as artifacts and share memory across different agents. The system can include prompt management and validate examples. The agentic advanced tools 514 can include tools use, generate, and execute code.

The agent lifecycle 510 can further be based on ontology documentation 122, which can be generated using an ontology software development kit (OSDK). The ontology documentation 122 and OSDK can be used to utilize some or all of the agentic advanced tools 514. Agents may operate using a design specific language (DSL), however a DSL may reduce expressivity of an agents (and thereby agency of the agent). The OSDK can advantageously enable the agent to write and operate in any language it prefers, such as any programming language (e.g., Python) and to fully wield and use the ontology 107. For example, the agent, operating with the OSDK, ontology documentation 122, and/or ontology 107, may thereby be able to handle not just specific tasks (e.g., "go summarize this thing"), but higher-order tasks (e.g., "go and optimize the supply chain"). Accordingly, the OSDK can become a universal orchestration language that can let the entire agent life cycle access, in a read and write way, the entirety of the ontology 107, through the agentic advanced tools 514. The agent lifecycle 510 can further be based on agentic basic tools 516 to quickly build simpler agents, which for example, may not need to access the OSDK or ontology documentation 122 to utilize. The agentic basic tools 516 can be used for simpler low-to-no code tasks, such as searching for documents. Furthermore, additional expressivity, tool optionality, and code execution functionality can further enable agency of agents and can reduce hallucinations.

Referring to the last two columns of FIG. 5, the system can enable serving of the agents through various agentic applications 530 and agentic services 520, and can enable the agents to provide various real-world tasks and functionality. These agentic services 520 and agentic applications 530 can be accomplished using one or a combination of the agentic advanced tools 514 and agentic basic tools 516. The agentic services 520 can provide mechanisms to serve the agents to applications, for example, by workshop, conversational frontends, custom reaction frontends, voice streaming, external endpoints, automation to trigger on-events, continuation executions, parallel batch execution, and/or the like. For example, agents can run the agentic services 520 continuously to empower various agentic applications 530 (e.g., applications with functionality enabled and/or provided by one or more agents). Examples of such agentic applications 530 include research, development, planning or organizing, reporting, quality assurance, data science and analytics automation copilots, enterprise search and knowledge management agents, chatbots for customer service, auditing and compliance, workflow bootstrapping and copilots, root cause analysis, automation of tasks, and/or the like. These agentic applications 530 can be part of the agent output 116 produced by the system in response to the user query 240. For example, the user query 240 can be "develop a chat box to answer questions about machine production." Accordingly, the system can be used not only to develop the application, but used as part of the process to run the application by providing the agentic services 520 through the system. By further example, a user can ask the chat box application "what bottlenecks are there in the production process?"

### Example Optional User Interfaces and Related Functionality

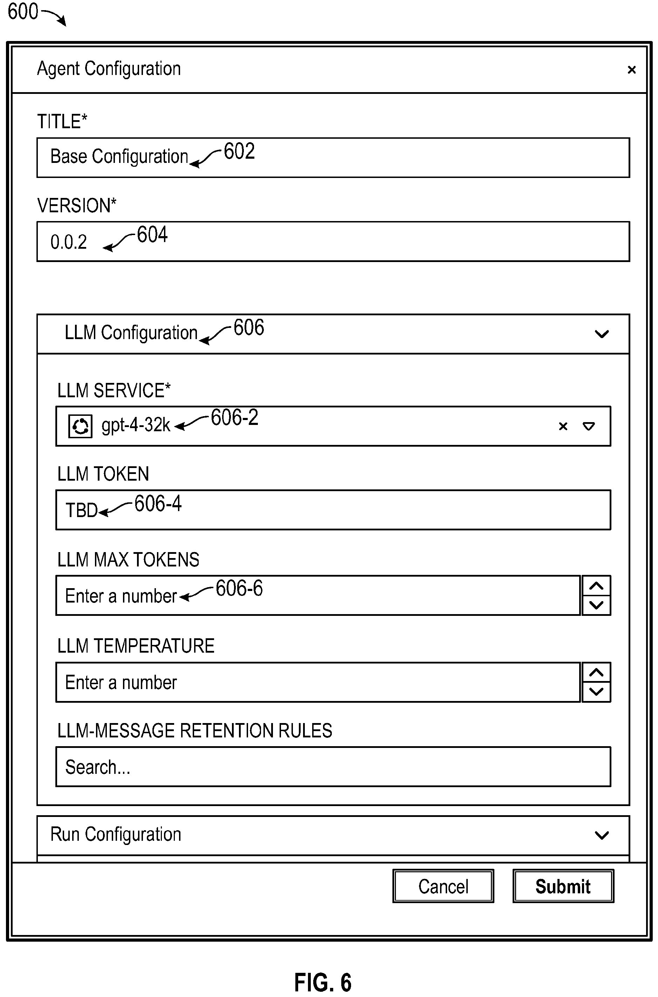

FIGS. 6, 7, 8A, and 8B show example user interfaces that illustrate utilizing the agent service 106 of the agent system 102 of FIGS. 1A and 1B to automatically solve complex problems through optional coordination among agents employed by the agent service 106 without being constrained by capabilities of individual agents, according to various implementations of the present disclosure. The example user interfaces illustrated in FIGS. 6, 7, 8A, and 8B may be optionally presented through the user interface module 104 of the agent system 102 and/or a user interface of the user 150.

The example user interfaces illustrated in FIGS. 6, 7, 8A, and 8B may optionally allow the user 150 to interact with the agent system 102 for configuring agents, interacting with the agents, and verifying results generated by the agents. In various implementations, the user 150 may configure the accessories 105, the agent storage 126, and an ontology 107, an LLM, tools, and other aspects associated with one or more agents through operating on the example user interfaces. For examples, the user 150 may configure which tools (e.g., a calculator or other tools) an agent can utilize to process tasks. The user 150 may also configure types of child-agents to which the agent may handoff tasks or sub-tasks, and maximum number of handoffs that can be utilized by the agent. Additionally and/or optionally, the user 150 may configure types of LLMs and/or machine learning (ML) models accessible to the agent through the example user interfaces. The example user interfaces may further allow the user 150 to view and track various configurations (e.g., through version control mechanisms noted above) that are available to configure an agent or child-agents of the agent. Advantageously, the user 150 may preserve a specific configuration of an agent that is tested to be effective for solving a specific type of problems while experimenting new configurations based on minor or minimal adjustments to the specific configuration without losing the efficacy of the specific configuration by interacting with the example user interfaces.

In various implementations, the user 150 may optionally evaluate or verify results generated by agents through manipulating the example user interfaces. In some examples, the example user interfaces may present information related to an individual run. For example, the information related to the individual run may include the initial prompt and subsequent prompts received by an agent from the user 150, starting and end timestamps of the individual run, status (e.g., completed, succeeded, failed, or the like) of the individual run, timelines of occurrence of events while the agent executing the individual run, intermediate results generated by the agent, child-agents to which the agent hands off tasks, number of errors committed by the agent when utilizing some tools, or the like. Advantageously, the example user interfaces may allow the user 150 to more efficiently evaluate or verify performances of agents through, for example, reviewing steps or actions taken by an agent to process a task.

Optionally, example user interfaces may present information related to accessories 105 utilized by agents to process tasks. In various implementations, example user interfaces may visualize relationships between at least some of the accessories 105 utilized by one or more agents for solving some problems. For example, example user interfaces may present interactive graphical representation(s) of at least some of the accessories 105 used by an agent. More specifically, interactive graphical representation(s) may represent at least some of the accessories 105 as nodes and represent relationships of at least some of the accessories 105 as edges. For example, an interactive graphical representation may visualize a first accessory utilized by an agent to process a task as a first node, visualize a second accessory utilized by the agent to process the task as a second node, and show that the first node is connected to the second node through an edge, where the edge indicates that the second accessory is generated based on the first accessory. Advantageously, graphical representation(s) of the accessories 105 enables the user 150 to efficiently review and track what accessories 105 are utilized by agents to process tasks and how an accessory is related to another. Additionally and/or optionally, the agent system 102 may allow the user 150 to create one or more accessories 105 by operating on example user interfaces.

As shown in FIG. 6, the user interface 600 can optionally include a display portion 602 that shows a title of a configuration of an agent. The title of the configuration of the agent can be editable by the user 150 to facilitate the user to manage configurations that are utilized to configure the agent. Here, the display portion 602 states "Base Configuration," which specifies the title of the configuration of the agent (e.g., one of the agents) that the user interface 600 is utilized to configure. In various implementations, agent(s) may be configurable based on various settings or parameters, where the agent(s) may share one or more common building blocks (e.g., an agent logic that defines how agents operate and/or interact with each other, tools, and/or users) but may be configured to various configurations using the user interface 600.

The user interface 600 can optionally further include a display portion 604 that shows a version of the configuration of the agent. The version of the configuration of the agent can also be editable by the user 150 to facilitate the user to manage configurations that are utilized to configure the agent. Here, the display portion 604 shows "0.0.2," indicating the version number of the configuration that the user interface 600 is utilized to configure. Advantageously, version controlled configurations may allow the agent system 102 and/or the user 150 to robustly and effectively track operations of agents, adapt agents among various configurations, or contrast strengths and weakness of an agent when operating under disparate configurations.

The user interface 600 can optionally include a display portion 606 that includes various configurations of an LLM utilized by an agent. Here, the display portion 606 reads "LLM Configuration," indicating configurations of the LLM employed by the agent can be configured by the user 150 through operating on sub-portion(s) (e.g., a sub-portion 606-2, a sub-portion 606-4, or a sub-portion 606-6) of the display portion 606. The LLM may assist the agent to handle requests from the user 150 and/or process various types of tasks, such as automatically generating texts to summarize a set of documents, conducting analysis based on data contained in articles, tables, spreadsheets, or the like, scheduling distribution of materials based on supply chain constraints and requirements from demand sides, or the like. For example, the agent may allow the user 150 to query internal or third-party data using the LLM (e.g., a QA (question and answer) LLM) that is trained to generate answers from user queries. In various implementations, the LLM utilized by the agent may be locally hosted, cloud managed, accessed via one or more Application Programming Interfaces ("APIs"), and/or any combination of the foregoing and/or the like. Data that may be processed by the agent through using the LLMs may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

As shown in FIG. 6, optionally, the sub-portion 606-2 of the display portion 606 can allow the user 150 to switch a model of the LLM employed by the agent. Here, the sub-portion 606-2 shows "gpt-4-32k," indicating a type of the model of the LLM. The sub-portion 606-2 may provide the user 150 the flexibility of easily swapping between various language models employed by the agent to provide various services through configuring the agent using the sub-portion 606-2. For example, the user 150 may swap the LLM (e.g., switching between GPT-4, GPT-3, and GPT-2) for analyzing information to provide recommendations (e.g., to which distribution centers shipment orders should be placed) based on analyses. Such model swapping flexibility provided by the sub-portion 606-2 may be beneficial in various aspects, such as experimentation and adaptation to different models based on specific use cases or requirements, providing versatility and scalability associated with services rendered by the agent system 102.

The display portion 606 can optionally further include at least the sub-portion 606-4 and the sub-portion 606-6 that allows the user 150 to configure various aspects of the LLM that are related to tokens utilized by the LLM. Here, the sub-portion 606-4 shows "TBD," indicating the token(s) that are utilized by the LLM is yet to be defined; the sub-portion 606-6 shows "Enter a number," prompting the user 150 to enter a number of maximum token size of prompts to the LLM. As such, the user 150 may flexibly reconfigure the agent from one LLM configuration to another LLM configuration. Advantageously, the user interface 600 enables the user 150 to swap or switch agent configurations related to LLM(s) employed by the agent for achieving various objectives. For example, the user 150 may feed the same input(s) to two agents that are configured the same except LLMs utilized by the two agents to evaluate or benchmark performances of the LLMs.

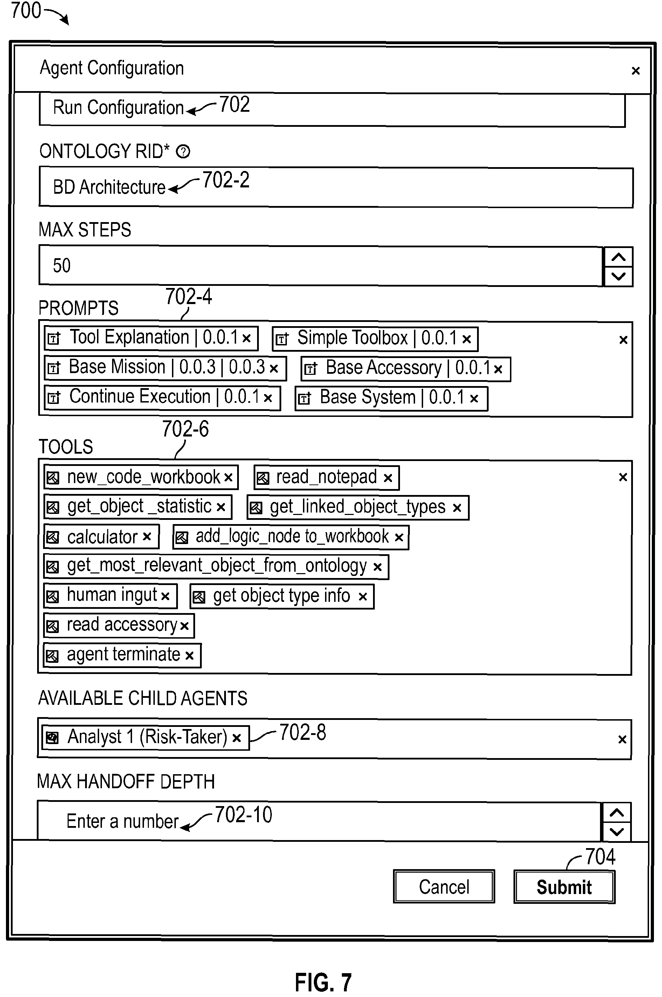

With reference to FIG. 7, the user interface 700 (which can be a portion for or continuation of user interface 600) can optionally further allow the user 150 to configure aspects of a run that is to be executed by an agent, such as an ontology 107, tools, prompts, or child-agents utilized by the agent for executing the run. As shown in FIG. 7, the user interface 700 can include a display portion 702 that includes various configurations of the agent for executing a run that can represent an interaction between the user 150 and the agent system 102 for processing tasks or solving problems received from the user 150. Configurations associated with the run may be set by the user 150 through operating on sub-portions (e.g., a sub-portion 702-2, a sub-portion 702-4, a sub-portion 702-6, a sub-portion 702-8, or a sub-portion 702-10) of the display portion 702, and stored by the agent system 102 to facilitate automation orientation and/or co-pilot orientation. The configurations related to the run may include the initial prompt and subsequent prompts received by the agent from the user, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like. Here, the display portion 702 reads "Run Configuration."

As shown in FIG. 7, optionally, the sub-portion 702-2 of the display portion 702 can allow the user 150 to specify an ontology 107 associated with the agent. Here, the sub-portion 702-2 reads "BD Architecture," indicating the ontology 107 associated with the agent may be created based on the notion of business development. Advantageously, when the agent is tasked to solve a problem related to a new subject matter (e.g., business development) during the run, the user 150 may configure the agent to utilize the ontology 107 that is created or updated based on the new subject matter.

The display portion 702 can optionally further include the sub-portion 702-4 that may allow the user 150 to define types of prompts or inputs the agent is to receive for processing tasks during the run. Here, the sub-portion 702-4 lists "Tool Explanation | 0.01," "Simple Toolbox | 0.01," "Base Mission | 0.03 | 0.03," "Base Accessory | 0.01," "Continue Execution | 0.01," and "Base System | 0.01," indicating names and versions of the prompts or inputs that the agent is to receive during execution of the run. For example, "Base Accessory | 0.01" indicates that the agent is to be provided with an accessory with a version number "0.01" for executing the run. Advantageously, the button 704 allows the user 150 to indicate to the agent types of prompts, inputs, or tasks that the agent receives for the run.

The display portion 702 can also optionally include the sub-portion 702-6 that may allow the user 150 to equip the agent with various tools to enable efficient execution of the run. As noted above, the tools may allow the agent to interact with the operational system, a database, the ontology 107, internal databases and system, and/or external systems. The tools can be any set of logic or rules that can be provided to the agent for the agent's use to obtain additional information, such as by generating a request for access to additional data via a plug-in. The tools can be used by the agent to generate requests (that may be fulfilled by the agent system 102) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. Here, tools listed in the sub-portion 702-6 include "new_code_workbook," "read_notepad," "get_object_statistic,""get_linked_object_types,""calculator,""add_logic_node_to_workboo k," "read_accessory," "get_most_relevant_object_from_ontology," "get_object_type_info," "agent_terminate," "human_input."

As shown in FIG. 7, optionally, the display portion 702 may further include the sub-portion 702-8 that may allow the user 150 to configure available child-agent(s) to which the agent may handoff tasks or sub-tasks. Here, the sub-portion 702-8 reads "Analyst 1 [Risk-Taker]," indicating the child agent may be specialized in risk taking analysis. When the agent determines that a task which the agent is processing requires specialized capability of analyzing risks, the agent may handoff some or all of the task to another agent (or sub-agent) that has been trained or tested to efficiently analyze risks, where the agent/sub-agent has been configured by the user 150 and/or the agent system 102 to be available to the agent through operating on the sub-portion 702-8.

The display portion 702 may further include the sub-portion 702-10 that may allow the user 150 to set a maximum number of handoffs for the agent. Here, the sub-portion 702-10 reads "Enter a number," indicating to the user 150 to input a number to limit the number of handoffs for the agent during execution of the run. Advantageously, limiting the number of handoffs on some or all types of tasks may increase security of the agent system 102.

Although not illustrated in FIGS. 6-7, the user interface module 104 may optionally further allow the user 150 to configure various types of handoffs that an agent can use during a run. For example, through the user interface module 104 the user 150 may configure the agent to be able to use blocking handoffs, where the agent may handoff a task to a child agent, pauses until receiving a result from the child agent, and then proceeds after receiving the result. As another example, through the user interface module 104 the user 150 may configure the agent to be able to use parallel handoffs, where the agent may handoff tasks in parallel to multiple child agents, and, without waiting for results from the child agents, continues to process other tasks or sub-tasks that the agent is processing without handing off. Advantageously, various handoffs schemes configurable by the user 150 may enable the agent service 106 to more flexibly and efficiently utilize agents to process tasks based on characteristics of the tasks.

The user interface 600 and/or user interface 700 can also include a button 704 that may allow the user 150 to submit the configurations described in FIGS. 6-7 above to configure the agent for processing tasks. By clicking on the button 704, the user 150 may cause the agent system 102 (e.g., the agent service 106) to configure the agent based on demands of the user 150. Advantageously, allowing the user 150 to configure agents based on various user objectives may enhance scalability and reusability of the agent system 102.

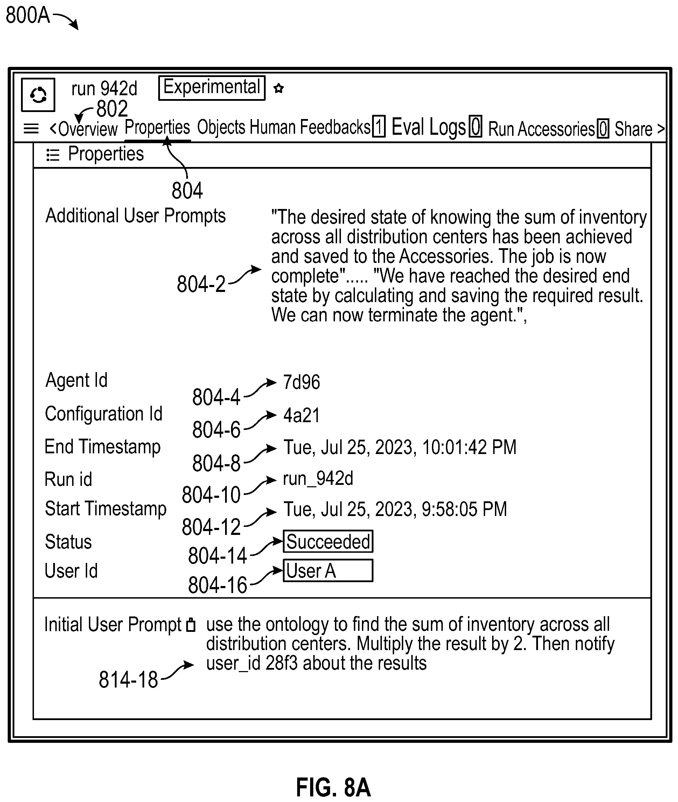

FIGS. 8A-8B show example user interfaces 800A and 800B depicting optional information related to a run to allow the user 150 to track or monitor problem solving processes went through by agents to evaluate the soundness of steps taken or decisions made by agents. The agent system 102 may capture and synchronize data and/or information associated with a run into the ontology 107 associated with the database 209 of the database module 108. As such, data utilized by the agent system 102 may be organized and linked to relevant context for providing a comprehensive knowledge base for evaluation, verification, and analysis through presenting the example user interfaces 800A and 800B to the user 150.

In various implementations, the agent system 102 may optionally utilize an interaction data object (similar to data object 210) to store information and/or data associated with a run of the user 150 in the database 209 of the database module 108 for review and evaluation by the user 150. The interaction data object may include data objects or may be linked to data object(s) that represent documents, data sources, timestamps of events (e.g., when one or more user queries of the user are received and/or responded), profiles of the user 150, or the like that are associated with the run. For example, initial and subsequent prompts from the user 150 and/or steps taken by agents to fulfill objectives of the user 150 can be stored by the agent system 102 using the interaction data object and/or data objects associated with the interaction data object for later evaluation. Besides evaluation by the user 150, the agent system 102 may utilize the interaction data object and/or additional data objects to automatically generate evaluation reports for various purposes, such as evaluating the performances of agents. Advantageously, interaction data objects stored in the database 209 of the database module 108 may enable information associated with the run to be easily reviewable. The agent system 102 may further utilize information stored using the interaction data object and/or other data objects to evaluate if agents are not processing tasks efficiently.

As illustrated in FIG. 8A, the user interface 800A can optionally include a display portion 802 and a display portion 804 that enable the user 150 to navigate information related to a run. Here, the display portion 802 reads "Overview," indicating the user 150 can review overview of the run by navigating to the display portion 802. The display portion 804 reads "Properties," indicating properties associated with the run can be reviewed by the user 150 by navigating to the display portion 804. As indicated in the user interface 800A, the user 150 may be navigating information associated with the run within the display portion 804.

The user interface 800A can further include a display portion 804-2, a display portion 804-4, a display portion 804-6, a display portion 804-8, a display portion 804-10, a display portion 804-12, a display portion 804-14, a display portion 804-16, and a display portion 814-18 that illustrate various properties associated with a run. The display portion 814-18 shows an initial user prompt from the user 150 to the agent system 102 for the run. Here, the display portion 814-18 reads "use the ontology to find the sum of inventory across all distribution centers. Multiply result by 2. Then notify user_id 28f3 about the results." The display portion 804-18 may indicate to an agent (e.g., the agent that is configured through the example user interface 600) to use the ontology 107 specified in the sub-portion 702-2 to process a task (e.g., find the sum of inventory across all distribution centers) specified by the initial user prompt.

Optionally, the display portion 804-2 shows additional user prompts received by the agent system 102 from the user 150 during the run. Here, the display portion 804-2 reads "The desired state of knowing the sum of inventory across all distribution centers has been achieved and saved to the accessories. The job is now complete.... We have reached the desired end state by calculating and saving the required result. We can now terminate the agent." As such, the display portion 804-2 indicates that the user 150 has instructed the agent system 102 (e.g., the agent service 106) to terminate processing the task after the request from the user 150 is fulfilled.

The display portion 804-4 optionally shows an identification number (e.g., an agent ID) of an agent that is employed in the run to fulfill request(s) from the user. Here, the display portion 804-4 reads "7d96." The display portion 804-4 may enable the user 150 to effectively identify the agent that is utilized to execute the run such that the user 150 may efficiently associate the performance with the agent that is responsible for executing the run.

The display portion 804-6 optionally shows an identification number of a configuration (e.g., a configuration ID) of the agent of the display portion 804-4. Here, the display portion 804-6 reads "4a21," specifying the ID of the configuration that is used to configure the agent for executing the run. Advantageously, assigning IDs to configurations of an agent may allow the user 150 and/or the agent system 102 to robustly and effectively track operations of agents, adapt agents among various configurations, or contrast strengths and weakness of an agent when operating under disparate configurations.

The display portion 804-8 optionally indicates an end time (e.g., an end timestamp) of the run. Here, the display portion 804-8 reads "Tue, July 25, 2023, 10:01:42 PM," indicating the time the run completed. The display portion 804-12 indicates a start time (e.g., a start timestamp) of the run. Here, the display portion 804-12 states "Tue, July 25, 2023 9:58:05 PM," indicating the time the time the run started. Advantageously, the display portion 804-8 and the display portion 804-12 allow the user 150 to gauge amount of time the agent with the agent ID shown in display portion 804-4 takes to complete the run.

The display portion 804-10 optionally shows an identification number (e.g., a run ID) of the run. Here, the display portion 804-10 shows "run_942d." The display portion 804-14 shows a status of the run. Here, the display portion 804-14 reads "Succeeded," indicating that the run has been successfully completed and the request(s) of the user 150 for the run have been fulfilled. The display portion 804-16 shows an identification (e.g., a user ID) of the user 150 that may initiate the run. Here, the display portion 804-16 shows "User A."

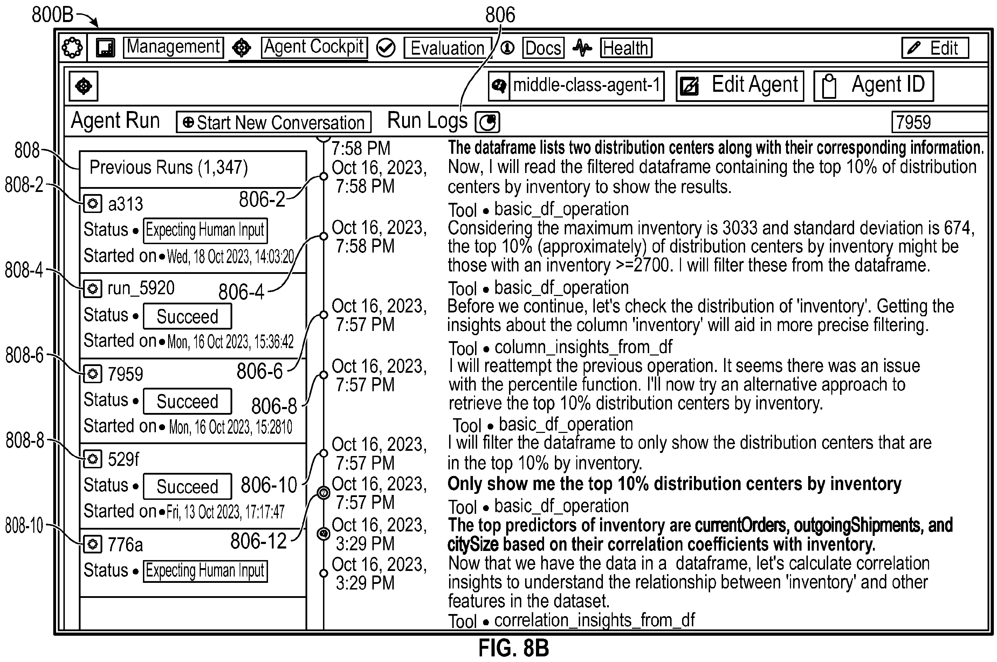

FIG. 8B illustrates the example user interface 800B optionally presenting a log 806 of a run to a user (e.g., the user 150). The agent system 102 may generate and maintain the log 806 to record events, timelines, received inputs, or generated outputs while an agent processes tasks during the run. The log 806 may describe events that occurred while the agent processes tasks and corresponding timestamps, inputs received from users and/or the system, and/or results generated by the agent while processing tasks during the run. Although not illustrated in FIG. 8B, the log 806 may further record the number of errors committed by the agent while processing tasks. Advantageously, the log 806 may allow the user 150 to effectively monitor or evaluate the performances of agents during the run for taking appropriate measures (e.g., re-train an agent for processing a particular type of task in response to monitoring a high error number from the agent while processing the particular type of task).

As shown in FIG. 8B, the log 806 may include a message portion 806-12, which may indicate a supplemental instruction provided by the user 150 to the agent system 102 through the user interface module 104. The supplemental instruction (as well as initial prompts from the user 150) may be received by the agent coordinator 124, which transmits to the agent that executes the run. Here, the message portion 806-12 reads "only show me the top 10% distribution centers by inventory" with a timestamp of "Oct 16, 2023, 7:57PM." The message portion 806-12 allows the user 150 to review when user input(s) is provided to the agent during the run.

The log 806 may also include a message portion 806-2, a message portion 806-4, a message portion 806-6, a message portion 806-8, a message portion 806-10, and a message portion 806-12. Each of the message portions 806-2, 806-4, 806-6, 806-8, and 806-10 indicates an action taken by an agent during the run and a time the action was taken in response to receiving input(s) as indicated in the message portion 806-12 from the user 150. For example, the message portion 806-2 indicates a time when the agent read filtered data frame containing the top 10% of distribution centers by inventory. Here, the message portion 806-2 reads "Now, I will read the filtered data frame containing the top 10% of distribution centers by inventory to show the results" with a timestamp on "Oct 16, 2023, 7:58PM." As such the message portion 806-2 allows the user 150 to review the action taken by the agent for various purposes, such as reviewing the soundness of steps taken or decision made by the agent responsive to user inputs.

The user interface 800B may further include a display portion 808 that lists previous runs executed by one or more agents for fulfilling requests from the user 150. Here, the display portion 808 states "Previous Run (1,347)," indicating the agent system 102 may have executed 1347 runs for the user 150. Under the display portion 808 are a sub-portion 808-2, a sub-portion 808-4, a sub-portion 808-6, a sub-portion 808-8, and a sub-portion 808-10. Each of the sub-portions 808-2, 808-4, 808-6, 808-8, and 808-10 may respectively summarize a previous run executed by the agent system 102 for the user 150. For example, the sub-portion 808-8 shows an identification number (e.g., 529f) of a previous run, along with a status (e.g., "Succeeded") and start time (e.g., "Fri, 13 Oct 2023, 17:17:47") of executing the previous run.

### Example Aspects Related to Ontology-Based Agentic Framework

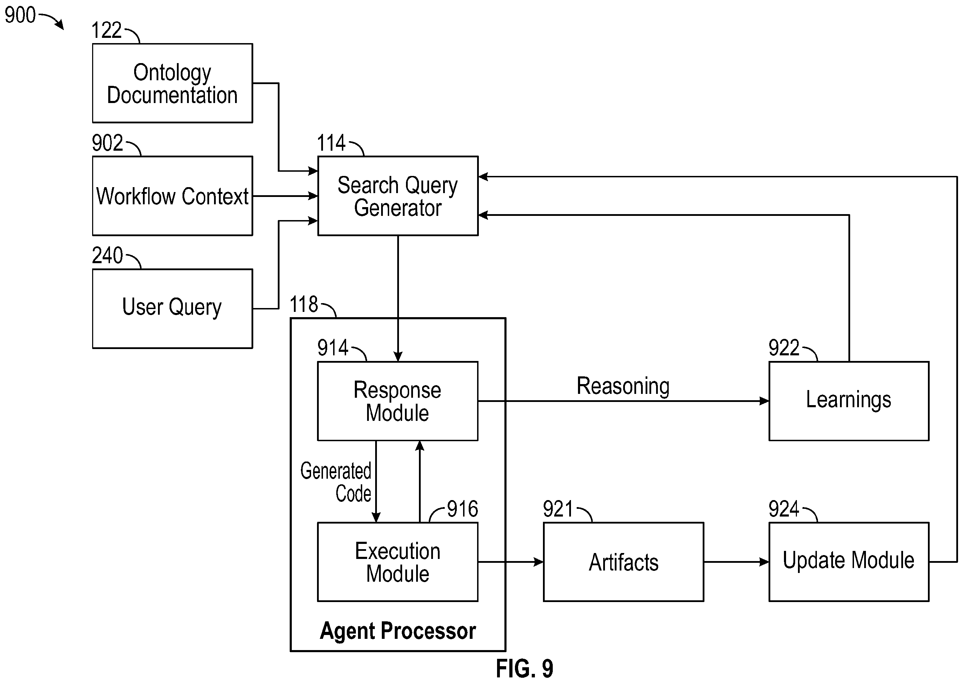

FIG. 9 is a block diagram illustrating an example operation 900 of the system, according to various implementations of the present disclosure. Through the agent processor 118, an agent (or sub-agent) can perform various actions in response to a user query 240. The agent can have access and/or context to ontology documentation 122 for how to read and write to the ontology and data objects defined by the ontology through an OSDK, workflow context 902 for information and state of a workflow, and/or the user query 240. The user query 240 can be higher level than usual, and/or something more than retrieval oriented that can be accomplished through agentic basic tools (e.g., "how many machines have been produced?"). Rather, the user query 240 may be more automation-oriented, which can require advanced agentic tools (e.g., "what are the bottlenecks?"). To perform the operations and/or answer the user query 240, the agent can cause probing using a prompt including ontology documentation 122 to obtain the information it needs. The OSDK can be used to generate the ontology documentation 122. This may include a loop in which, for example, the agent generates a series of search queries through the search query generator 114, prepare a response to the user query using the response module 914 by doing a series of retrievals as search queries, access a series of tools through the execution module 916, and/or the like. The agent processor 118 can delegate between agents and/or sub-agents by coordinating with the agent coordinator 124.

In some instances, the search query generator 114 can be separate from the agent processor 118, and in other instances, the search query generator 114 can be part of the agent processor 118 alongside the response module 914 and execution module 916. For example, the agent, as part of either the agent service 106 or agent processor 118, can first cause generation of a search query like "access production properties of machine object types." Accordingly, the search query can be associated with an action plan for what needs to answer the user query 240, which can include a series of tasks. The LLM (or multiple LLMs) of the agent through the response module 914 can respond with code associated with each search query that the agent needs to cause generation to get the context or do some tasks. The agent processor can go and run those tasks through the execution module 916, for example, based on the ontology documentation 122 to query objects, functions, actions, and/or the like. The code can be based off functions in the ontology documentation related to the task and adjusted for the relevant data objects of the data object types. Code executions and/or runtime can be provided by the execution module 916 of the system. "Code execution" can include any type of analysis, tasks, functionality, and/or the like. The system can optionally limit the code execution options available to the agent (e.g., "here are three functions available from your ontology"). However, greater agency can be provided to agents by providing greater optionality for code execution and tools.

If all tasks of a search query are completed, the agent can cause provision of learnings 922 that can provide insights and answers to the user query 240, including the reasoning completed by the agent and/or metadata analyzed throughout the tasks to arrive at the learnings 922. These learnings 922 can be displayed in an interactive graphical user interface (GUI). If the task is completed but does not answer the user query 240, such as when there are further tasks to be completed, the response module 914 can still provide learnings 922 and reasoning/metadata for the completed task, which can be displayed by the GUI. When the code is executed by the execution module 916, artifacts 921 can be generated that can describe the code generated, the tools accessed, and the process of how the functions were executed to complete a task. The artifacts can include data generated by the agent, such as data objects or, in some instances, new definitions of data object types. Accordingly, the artifacts 921 can provide not just the output of the agent, but also how the output was generated. These artifacts 921 can be utilized by the update module 924 to create visualizations of the process, such as tables, and/or used to determine how to change data objects defined by the ontology according to the ontology documentation 122. Accordingly, the artifacts 921 can be used to update data objects defined by the ontology 107 or the ontology 107 itself. Artifacts 921 can be generated regardless of whether the task is completed or not. In some instances, the artifacts 921 and the learnings 922 can be used to generate the next search query. Artifacts saved as data objects from prior runs can also be used to generate initial search queries. These artifacts can be included as part of the workflow context.

For example, even if the task is not completed, the agent can loop to cause generation of another search query through the search query generator 114 to determine the next step to answer the user query 240. Accordingly, the action plan can update, such as "I now see the state. Let me identify which are the problematic parts of that state now." A search query can then be generated based on artifacts 921 and learnings 922 associated with the previous search query. For example, the search query can be "access production efficiency data objects related to the machine data object at the current time and at a previous time" and "compare the two version of the production efficiency data object." To execute the search query, the agent may choose to cause generation of code to do data analysis. Alternatively, it may choose to do correlation analysis, such as by executing code to simulate the operation of the different states and gather data related to the simulations. The agent can enable finding out that from the accessed data objects, for example, "state five" seems to be particularly slow, and that is where the durations are longest. Accordingly, the agent can cause determination that the simulated "task five" associated with "state five" is a bottleneck, so the agent can then generate another search query to investigate why "state five" is slow, such as by a command to "access properties of the production data object that differ by a threshold amount." These analyses can be used to generate the artifacts 921 that the update module 924 can use to provide to the search query generator 114. The agent can then cause generation of code to accomplish the search query to look at processes that used to take less time in "task five," processes that take more time in "task five," and/or features of "task five" that are more correlated with taking less time. Then, the agent can proceed with enabling another task to formulate a thesis, which can include looking to see if the processes that take more time are present today. If those processes are present, the agent can enable providing information as learnings 922 to the user that "task five" associated with "state five" is a bottleneck, and further provide information about the reasons for the analysis and the decision information that was used. The agent can further cause determining and providing learnings 922 such as: "when you had these tasks and they were bottlenecked in this way, these are the things you can do;" or "maybe these things don't apply in this context because of XYZ and these ones apply; so here's my action recommendation." The user can then prompt the agent to perform the action, or the agent may automatically cause performance of the action through the update module 924. In some instances, the agent may enable sending a notification saying: "this is the thing that we saw, but we couldn't solve it without making this change, so I made the change, and if you want you can go and review it."

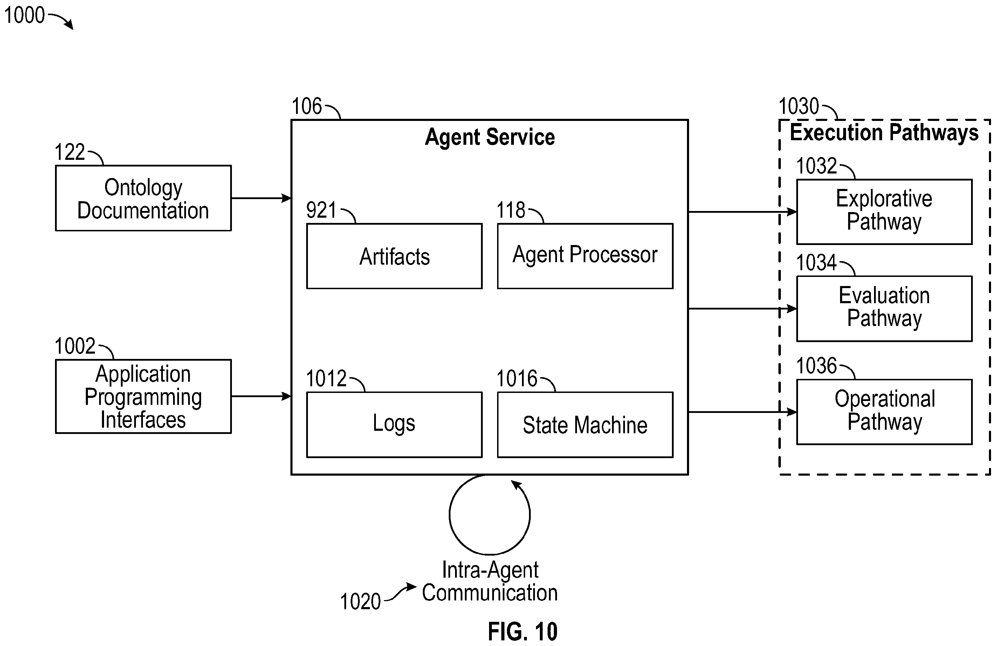

FIG. 10 is a block diagram 1000 illustrating an example operation of the system, according to various implementations of the present disclosure. As the agent service 106 performs various tasks, and/or as the agent continuously runs, the agent can access various tools and perform various code executions. Based on the ontology documentation 122 and relevant application programming interfaces (APIs) 1002 from a user query, an agent can be determined alongside the scope of the tools it has access to. The agent service 106 can guide the agent's behavior in completing the user query 240. Based on the user query 240, ontology documentation 122 that informs how the agent interacts with the ontology documentation and ontology 107, and APIs 1002, the agent can cause generation of search queries with tasks and code to complete these tasks, such as through the agent processor 118. This code can be executed by the execution module 916 of the agent processor 118, which can generate artifacts 921. The agent may enable finding errors in the code, which can be saved as artifacts 921, and may need to fix those errors. In some instances, the error may be more difficult to fix, and the agent can enable restoring to a previous state prior to generating the errors from the code. The agent service 106 can include logs 1012 that provide checkpointing and state recovery. The agent service 106 may generate and maintain a log to record events, timelines, received inputs, or generated outputs while agents process tasks or solve problems received from the user 150. The logs 1012 can further assist with debugging, forking, evaluation, and/or the like. The errors committed by agents may be recorded in a log generated and stored by the agent system 102 in a storage (e.g., the database module 108) of the agent system 102. Advantageously, the errors allow the user 150 to evaluate performance of the agents while using various tools, enabling the user 150 to provide feedback to the agent system 102 for improving the performance of the agents. For example, the agent processor 118 may pause the agent if the agent is committing more errors while processing a task using a particular tool and instruct the agent to use alternative tool(s) for processing the task. The agent service 106 can include communication with intra-agent communication 1020 through the agent coordinator 124, to not only delegate tasks between agents, but to provide a protocol to communicate and share artifacts 921 as a shared memory, either asynchronously or synchronously. The intra-agent communication 1020 network can enable multi-agent framework.

Optionally, a task being performed by an agent can be formulated as a state machine 1016. Each state may include a checker function. The checker functions can provide prescriptions, such as by code, to the agent, and guardrails that the agent must follow during execution. The checker function can provide a check to confirm that the agent performed the expected function or obtained the necessary results before proceeding to the next stage. Such features can help reduce hallucinations in the performance of a task or series of tasks. For example, where an agent only has tools for read access for a data set and a user query 240 is requesting to organize the data set, the agent may believe it completed the task because it acted as if it had write access. Accordingly, the checker function can prevent a hallucination that the task is completed by ensuring the agent is acting within its settings.

The agent may generate a response while running the search query that indicates, for example, "here is the data frame that has the rows relevant to your task." Then, the agent can proceed to the next task that it determines, such as "now I need to do a principal component analysis to actually understand which features I can focus on" and cause generation of a search query to access data object associated with that task. There are different execution pathways 1030 that the agent system can be based on to generate the response. The execution pathways 1030 can include, for example, explorative pathway 1032, evaluation pathway 1034, operational pathway 1036, and/or the like. The explorative pathway 1032, or heterogeneous pathway, can be based on questions and answers, and can provide dynamic expressive visualization of data objects defined by the ontology 107, such as becoming dashboard prototypes. The explorative pathway 1032 can include search queries, such as "turn these raw datasets into full projects with pipelines and dashboards," and can provide heterogeneous unsupervised insights, such as for root cause analysis, opportunities to invest or cut cost, emergent patterns, research and development, knowledge graphs, and/or the like. The evaluation pathway 1034 can be based on agents scored against deterministic functions with the same inputs, and can provide self-supervised agent fitness and/or evolution through reinforced learning environments. The operational pathway 1036 can be based on agents as a delta or subject matter expert, which can be aware of user processes, rules, and/or goals. Accordingly, the system can enable the harnessing of all statistical and data science methods through agents into a business process.

### Additional Example Implementations and Details

In various implementations, the system (e.g., one or more aspects of the agent system 102, one or more aspects of the computing environment 100, and/or the like) may comprise, or be implemented in, a "virtual computing environment". As used herein, the term "virtual computing environment" should be construed broadly to include, for example, computer-readable program instructions executed by one or more processors (e.g., as described in the example of FIG. 11) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may comprise one or more virtual machines, containers, and/or other types of emulations of computing systems or environments. In some implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, FIG. 11 shows a block diagram that illustrates a computer system 1100 upon which various implementations and/or aspects (e.g., one or more aspects of the computing environment 100, one or more aspects of the agent system 102, one or more aspects of the user 150, one or more aspects of the data processing service 120, one or more aspects of the LLM 130, and/or the like) may be implemented. Multiple such computer systems 1100 may be used in various implementations of the present disclosure. Computer system 1100 includes a bus 1102 or other communication mechanism for communicating information, and a hardware processor, or multiple processors, 1004 coupled with bus 1102 for processing information. Hardware processor(s) 1104 may be, for example, one or more general purpose microprocessors.

Computer system 1100 also includes a main memory 1106, such as a random-access memory (RAM), cache and/or other dynamic storage devices, coupled to bus 1102 for storing information and instructions to be executed by processor 1104. Main memory 1106 also may be used for storing temporary variables or other intermediate information during execution of instructions to be executed by processor 1104. Such instructions, when stored in storage media accessible to processor 1104, render computer system 1100 into a special-purpose machine that is customized to perform the operations specified in the instructions. The main memory 1106 may, for example, include instructions to implement server instances, queuing modules, memory queues, storage queues, user interfaces, and/or other aspects of functionality of the present disclosure, according to various implementations.

Computer system 1100 further includes a read only memory (ROM) 1108 or other static storage device coupled to bus 1102 for storing static information and instructions for processor 1104. A storage device 1110, such as a magnetic disk, optical disk, or USB thumb drive (Flash drive), and/or the like, is provided and coupled to bus 1102 for storing information and instructions.

Computer system 1100 may be coupled via bus 1102 to a display 1112, such as a cathode ray tube (CRT) or LCD display (or touch screen), for displaying information to a computer user. An input device 1114, including alphanumeric and other keys, is coupled to bus 1102 for communicating information and command selections to processor 1104. Another type of user input device is cursor control 1116, such as a mouse, a trackball, or cursor direction keys for communicating direction information and command selections to processor 1104 and for controlling cursor movement on display 1112. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computer system 1100 may include a user interface module to implement a GUI that may be stored in a mass storage device as computer executable program instructions that are executed by the computing device(s). Computer system 1100 may further, as described below, implement the techniques described herein using customized hard-wired logic, one or more ASICs or FPGAs, firmware, and/or program logic which in combination with the computer system causes or programs computer system 1100 to be a special-purpose machine. According to one implementation, the techniques herein are performed by computer system 1100 in response to processor(s) 1104 executing one or more sequences of one or more computer-readable program instructions contained in main memory 1106. Such instructions may be read into main memory 1106 from another storage medium, such as storage device 1110. Execution of the sequences of instructions contained in main memory 1106 causes processor(s) 1104 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1104 for execution. For example, the instructions may initially be carried on a magnetic disk or solid-state drive of a remote computer. The remote computer can load the instructions into its dynamic memory and send the instructions over a telephone line using a modem. A modem local to computer system 1100 can receive the data on the telephone line and use an infra-red transmitter to convert the data to an infra-red signal. An infra-red detector can receive the data carried in the infra-red signal and appropriate circuitry can place the data on bus 1102. Bus 1102 carries the data to main memory 1106, from which processor 1104 retrieves and executes the instructions. The instructions received by main memory 1106 may optionally be stored on storage device 1110 either before or after execution by processor 1104.

Computer system 1100 also includes a communication interface 1118 coupled to bus 1102. Communication interface 1118 provides a two-way data communication coupling to a network link 1120 that is connected to a local network 1122. For example, communication interface 1118 may be an integrated services digital network (ISDN) card, cable modem, satellite modem, or a modem to provide a data communication connection to a corresponding type of telephone line. As another example, communication interface 1118 may be a local area network (LAN) card to provide a data communication connection to a compatible LAN (or WAN component to communicate with a WAN). Wireless links may also be implemented. In any such implementation, communication interface 1118 sends and receives electrical, electromagnetic, or optical signals that carry digital data streams representing various types of information.

Network link 1120 typically provides data communication through one or more networks to other data devices. For example, network link 1120 may provide a connection through local network 1122 to a host computer 1124 or to data equipment operated by an Internet Service Provider (ISP) 1026. ISP 1126 in turn provides data communication services through the worldwide packet data communication network now commonly referred to as the "Internet" 1028. Local network 1122 and Internet 1128 both use electrical, electromagnetic, or optical signals that carry digital data streams. The signals through the various networks and the signals on network link 1120 and through communication interface 1118, which carry the digital data to and from computer system 1100, are example forms of transmission media.

Computer system 1100 can send messages and receive data, including program code, through the network(s), network link 1120 and communication interface 1118. In the Internet example, a server 1130 might transmit a requested code for an application program through Internet 1128, ISP 1126, local network 1122 and communication interface 1118.

The received code may be executed by processor 1104 as it is received, and/or stored in storage device 1110, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements, and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computer-implemented method, performed by one or more hardware computer processors executing program instructions, comprising: providing a set of data objects, wherein the set of data objects is associated with an ontology; receiving a user query associated with the set of data objects; providing ontology documentation indicative of a method for accessing data objects of the set of data objects, wherein the ontology documentation is specific to the ontology; generating a prompt for providing to a large language model ("LLM")-based agent, wherein the prompt includes at least: the ontology documentation and the user query; providing the prompt to the LLM-based agent to cause the LLM-based agent to at least: generate a search query based on the ontology documentation and the user query; cause execution of the search query to access one or more data objects of the set of data objects; and generate a response to the prompt based at least in part on the one or more data objects; and receiving and causing display of the response in an interactive graphical user interface.

Clause 2. The method of Clause 1, wherein the ontology includes definitions of data object types of data objects of the set of data objects.

Clause 3. The method of any of Clauses 1-2 further comprising; automatically generating the ontology documentation based on a documentation template and information indicative of the ontology.

Clause 4. The method of Clause 3, wherein the information indicative of the ontology includes indications of definitions of data object types of the ontology.

Clause 5. The method of any of Clauses 1-4, wherein causing execution of the search query comprises using an application programming interface ("API") to access the one or more data objects.

Clause 6. The method of any of Clauses 1-5, wherein: the LLM-based agent is configured to hand off tasks associated with the prompt to a plurality of sub-agents, the LLM-based agent causing execution of the search query by handing off at least a portion of the search query to at least one of the plurality of sub-agents to execute, and the LLM-based agent generating at least a portion of the response by receiving the response from at least one of the plurality of sub-agents; and the LLM-based agent is configurable through a first set of settings and at least one of the plurality of sub-agents are configurable through a second set of settings different from the first set of settings.

Clause 7. The method of any of Clauses 1-6, wherein the search query further includes: an action plan to answer the user query.

Clause 8. The method of any of Clauses 1-7, wherein causing execution of the search query comprises: causing generation of code to provide to an ontology software development kit ("OSDK"), the search query comprising the code; causing processing of the code, using the OSDK, to access the one or more data objects of the set of data objects.

Clause 9. The method of any of Clauses 1-8, wherein providing the prompt to the LLM-based agent further causes the LLM-based agent to at least: in response to receiving an error from execution of the search query, generate a second search query, wherein the second query includes at least: the ontology documentation, the user query, and the error.

Clause 10. The method of Clause 9, causing the LLM-based agent to operate based on the second prompt to generate an updated search query.

Clause 11. The method of any of Clauses 1-10, wherein providing the prompt to the LLM-based agent further causes the LLM-based agent to at least: generate one or more artifacts associated with at least one of the generation or the execution of the search query, wherein the response is generated based on the one or more artifacts.

Clause 12. The method of Clause 11 further comprising: receiving and causing display of a process visualization in the interactive graphical user interface, wherein the process visualization is generated by the LLM-based agent based on the one or more artifacts.

Clause 13. The method of any of Clauses 11-12, wherein providing the prompt to the LLM-based agent further causes the LLM-based agent to at least: store the one or more artifacts as artifact data objects in the set of data objects, the artifact data objects accessible by a second LLM-based agent.

Clause 14. The method of any of Clauses 1-13, wherein providing the prompt to the LLM-based agent further causes the LLM-based agent to at least: generate a log associated with the execution of the search query, wherein the response is generated based on the log.

Clause 15. The method of Clause 14, wherein providing the prompt to the LLM-based agent further causes the LLM-based agent to at least: perform a check of the log, wherein the response is not generated unless the check is passed.

Clause 16. The method of any of Clauses 1-15, wherein the search query is further based on workflow context comprising statistics associated with the prompt.

Clause 17. The method of any of Clauses 1-16, wherein providing the prompt to the LLM-based agent further causes the LLM-based agent to at least: generate a search response to the search query prompt based at least in part on the one or more data objects; determine whether the search response comprises the response to the prompt; in response to the search response being different from the response, generate a second search query based on at least: the ontology documentation, the user query, and the search response; cause execution of the second search query to access one or more data objects of the set of data objects; and generate the response to the prompt based at least in part on the one or more data objects.

Clause 18. The method of any of Clauses 1-17, wherein the LLM-based agent is configurable through a set of settings associated with data object types for the one or more data objects.

Clause 19. A system comprising: one or more computer-readable storage mediums configured to store program instructions; and one or more processors configured to execute the program instructions to cause the system to perform the computer-implemented method of any of Clauses 1-18.

Clause 20. One or more computer-readable storage mediums configured to store program instructions, the program instructions executable by one or more processors to cause the one or more processors to perform the computer-implemented method of any of Clauses 1-18.

## Claims

1. A computer-implemented method, performed by one or more hardware computer processors executing program instructions, comprising:
providing a set of data objects, wherein the set of data objects is associated with an ontology;
receiving a user query associated with the set of data objects;
providing ontology documentation indicative of a method for accessing data objects of the set of data objects, wherein the ontology documentation is specific to the ontology;
generating a prompt for providing to a large language model ("LLM")-based agent, wherein the prompt includes at least: the ontology documentation and the user query;
providing the prompt to the LLM-based agent to cause the LLM-based agent to at least:
generate a search query based on the ontology documentation and the user query;
cause execution of the search query to access one or more data objects of the set of data objects; and
generate a response to the prompt based at least in part on the one or more data objects; and
receiving and causing display of the response in an interactive graphical user interface.

2. The method of Claim 1, wherein the ontology includes definitions of data object types of data objects of the set of data objects.

3. The method of Claim 1 or Claim 2 further comprising;
automatically generating the ontology documentation based on a documentation template and information indicative of the ontology and, optionally, wherein the information indicative of the ontology includes indications of definitions of data object types of the ontology.

4. The method of any preceding Claim, wherein causing execution of the search query comprises using an application programming interface ("API") to access the one or more data objects.

5. The method of any preceding Claim, wherein:
the LLM-based agent is configured to hand off tasks associated with the prompt to a plurality of sub-agents, the LLM-based agent causing execution of the search query by handing off at least a portion of the search query to at least one of the plurality of sub-agents to execute, and the LLM-based agent generating at least a portion of the response by receiving the response from at least one of the plurality of sub-agents; and
the LLM-based agent is configurable through a first set of settings and at least one of the plurality of sub-agents are configurable through a second set of settings different from the first set of settings.

6. The method of any preceding Claim, wherein the search query further includes: an action plan to answer the user query.

7. The method of any preceding Claim, wherein causing execution of the search query comprises:
causing generation of code to provide to an ontology software development kit ("OSDK"), the search query comprising the code;
causing processing of the code, using the OSDK, to access the one or more data objects of the set of data objects.

8. The method of any preceding Claim, wherein providing the prompt to the LLM-based agent further causes the LLM-based agent to at least:
in response to receiving an error from execution of the search query, generate a second search query, wherein the second query includes at least: the ontology documentation, the user query, and the error and, optionally, causing the LLM-based agent to operate based on the second prompt to generate an updated search query.

9. The method of any preceding Claim, wherein providing the prompt to the LLM-based agent further causes the LLM-based agent to at least:
generate one or more artifacts associated with at least one of the generation or the execution of the search query, wherein the response is generated based on the one or more artifacts, and, optionally, further comprising:
receiving and causing display of a process visualization in the interactive graphical user interface, wherein the process visualization is generated by the LLM-based agent based on the one or more artifacts, and, optionally,
wherein providing the prompt to the LLM-based agent further causes the LLM-based agent to at least:
store the one or more artifacts as artifact data objects in the set of data objects, the artifact data objects accessible by a second LLM-based agent.

10. The method of any preceding Claim, wherein providing the prompt to the LLM-based agent further causes the LLM-based agent to at least:
generate a log associated with the execution of the search query, wherein the response is generated based on the log, and, optionally, , wherein providing the prompt to the LLM-based agent further causes the LLM-based agent to at least:
perform a check of the log, wherein the response is not generated unless the check is passed.

11. The method of any preceding Claim, wherein the search query is further based on workflow context comprising statistics associated with the prompt.

12. The method of preceding Claim, wherein providing the prompt to the LLM-based agent further causes the LLM-based agent to at least:
generate a search response to the search query prompt based at least in part on the one or more data objects;
determine whether the search response comprises the response to the prompt;
in response to the search response being different from the response, generate a second search query based on at least: the ontology documentation, the user query, and the search response;
cause execution of the second search query to access one or more data objects of the set of data objects; and
generate the response to the prompt based at least in part on the one or more data objects.

13. The method of any preceding Claim, wherein the LLM-based agent is configurable through a set of settings associated with data object types for the one or more data objects.

14. A system comprising:
one or more computer-readable storage mediums configured to store program instructions; and
one or more processors configured to execute the program instructions to cause the system to perform the computer-implemented method of any preceding Claim.

15. One or more computer-readable storage mediums configured to store program instructions, the program instructions executable by one or more processors to cause the one or more processors to perform the computer-implemented method of any of Claims 1 to 13.
